# EUROPEAN PATENT APPLICATION

(11) **EP 4 686 233 A1**
(43) Date of publication of application: **28.01.2026**
(21) Application number: 23928086.0
(22) Date of filing: 23.03.2023
(51) Int. Cl.: H04W 4/30

(54) **COMMUNICATION METHOD, APPARATUS, AND DEVICE, STORAGE MEDIUM, CHIP, PRODUCT, AND PROGRAM**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: Grassi, Stefano
(86) International application number: PCT/CN2023/083468
(87) International publication number: WO 2024/192774

(57) **Abstract**

Embodiments of the present application provide a communication method, apparatus, and device, a storage medium, a chip, a product, and a program. The method comprises: a core network device receives a first sensing request; the core network device determines one or more sensing nodes from at least one sensing node; and the core network device sends a second sensing request to each of the one or more sensing nodes.

## Description

### TECHNICAL FIELD

Embodiments of the disclosure relate to the field of mobile communication technologies, and particularly to a communication method and apparatus, a device, a storage medium, a chip, a product and a program.

### BACKGROUND

Wireless sensing refers to sensing environmental information through sensing signals. The environmental information may include information of sensed objects in the environment. The information of the sensed objects includes at least one of: distribution, sizes, quantity, temperatures of the sensed objects, action behaviors of the sensed objects, respiratory rates of the sensed objects, or heart rates of the sensed objects.

In the wireless sensing, a transmitting unit may transmit sensing signals to the sensed objects, and the receiving unit may receive sensing signals that have undergone environment reflection and/or scattering and/or multipath propagation. The receiving unit may discover characteristics of the environment through signal processing, and further identify information of the sensed objects in the environment.

However, how to determine sensing node(s) for performing sensing tasks is a constant concern in the art.

### SUMMARY

Embodiments of the disclosure provide a communication method and apparatus, a device, a storage medium, a chip, a product and a program.

In a first aspect, a communication method provided in an embodiment of the disclosure includes the following operations.

A core network device receives a first sensing request.

The core network device determines one or more sensing nodes from at least one sensing node.

The core network device transmits a second sensing request to each of the one or more sensing nodes.

In a second aspect, a communication method provided in an embodiment of the disclosure includes the following operation.

A first sensing node receives a second sensing request transmitted by a core network device. The first sensing node is determined by the core network device from at least one sensing node.

In a third aspect, a communication apparatus provided in an embodiment of the disclosure includes a communication unit and a determination unit.

The communication unit is configured to receive a first sensing request.

The determination unit is configured to determine one or more sensing nodes from at least one sensing node.

The communication unit is further configured to transmit a second sensing request to each of the one or more sensing nodes.

In a fourth aspect, a communication apparatus provided in an embodiment of the disclosure includes a communication unit.

The communication unit is configured to receive a second sensing request transmitted by a core network device. The first sensing node is determined by the core network device from at least one sensing node.

In a fifth aspect, a communication device provided in an embodiment of the disclosure includes a processor and a memory.

The memory is configured to store a computer program.

The processor is configured to call the computer program stored in the memory and run the computer program to cause the communication device to perform the method in the first aspect or the second aspect.

In a sixth aspect, a computer storage medium provided in an embodiment of the disclosure stores one or more programs that, when executed by one or more processors, perform the method in the first aspect or the second aspect.

In a seventh aspect, a chip provided in an embodiment of the disclosure includes a processor for calling a computer program from a memory and running the computer program to perform the method in the first aspect or the second aspect.

In an eighth aspect, a computer program product provided in an embodiment of the disclosure includes a computer storage medium for storing a computer program. The computer program includes instructions executable by at least one processor that, when executed by the at least one processor, perform the method in the first aspect or the second aspect.

In a ninth aspect, a computer program provided in an embodiment of the disclosure causes a computer to perform the method in the first aspect or the second aspect.

In the embodiments of the disclosure, the core network device receives a first sensing request, the core network device determines one or more sensing nodes from at least one sensing node, and the core network device transmits a second sensing request to each of the one or more sensing nodes. In this way, the one or more sensing nodes for performing sensing tasks are determined by the core network device, thereby improving the flexibility for sensing node determination. Moreover, the sensing tasks are performed by the one or more sensing nodes, thereby improving the reliability for performing the sensing tasks, and reducing the overhead of the communication system.

### BRIEF DESCRIPTION OF THE DRAWINGS

The accompanying drawings, which are illustrated herein, provide a further understanding of the disclosure and constitute a part of this disclosure. The exemplary embodiments of the disclosure and their description are used to explain the disclosure and not to unduly limit the disclosure. In the drawings:
FIG. 1 is a diagram of an application scenario according to an embodiment of the disclosure.
FIG. 2 is a diagram of a system architecture based on a presentation manner of reference points provided in an embodiment of the disclosure.
FIG. 3 is a flowchart of a sensing operation method provided in an embodiment of the disclosure.
FIG. 4 is a flowchart of a communication method provided in an embodiment of the disclosure.
FIG. 5 is a flowchart of another communication method provided in an embodiment of the disclosure.
FIG. 6 is a flowchart of yet another communication method provided in an embodiment of the disclosure.
FIG. 7 is a flowchart of still another communication method provided in an embodiment of the disclosure.
FIG. 8 is a flowchart of a communication method provided in another embodiment of the disclosure.
FIG. 9 is a flowchart of a communication method provided in yet another embodiment of the disclosure.
FIG. 10 is a flowchart of a communication method provided in still another embodiment of the disclosure.
FIG. 11 is a flowchart of another communication method provided in another embodiment of the disclosure.
FIG. 12 is a structural diagram of a communication apparatus provided in an embodiment of the disclosure.
FIG. 13 is a structural diagram of another communication apparatus provided in an embodiment of the disclosure.
FIG. 14 is a structural diagram of a communication device provided in an embodiment of the disclosure.
FIG. 15 is a structural diagram of a chip according to an embodiment of the disclosure.

### DETAILED DESCRIPTION

The technical solutions in the embodiments of the disclosure would be described below in conjunction with the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

The technical solutions described in embodiments of the disclosure may be combined in various ways without conflict. In the description of the disclosure, "a plurality of/multiple" means two or more unless otherwise explicitly and specifically defined.

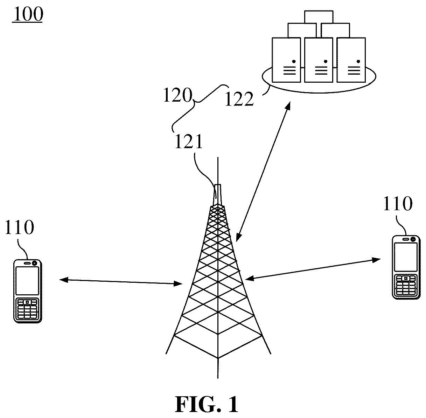

FIG. 1 is a diagram of an application scenario according to an embodiment of the disclosure. As illustrated in FIG. 1, the communication system 100 may include terminals 110 and a network device 120. The network device 120 may communicate with the terminal 110 through an air interface. Multi-service transmissions are supported between the terminal 110 and the network device 120.

It should be understood that the embodiments of the present disclosure are described only using the communication system 100 as an example, and the embodiments of the present disclosure are not limited thereto. That is, the technical solutions in the embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, a LTE-based access to unlicensed spectrum (LTE-U) system, a NR-based access to unlicensed spectrum (NR-U) system, a Universal Mobile Telecommunications System (UMTS), a Wireless Local Area Network (WLAN), a Wireless Fidelity (WiFi), an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, or a future communication system (e.g., a sixth generation (6G) communication system, a seventh generation (7G) communication system).

The network device 120 in the embodiments of the disclosure may include an access network device 121 and/or a core network device 122. The access network device may provide communication coverage for a particular geographic area and may communicate with a terminal 110 (e.g., a UE) located within the coverage area.

The terminal device in any one of the embodiments in the disclosure is a device with a wireless communication function, which may be arranged on land including indoor or outdoor areas, handheld or on-board, or may be arranged on the water (such as on a ship), or may be arranged in the air (such as on an airplane, a balloon, or a satellite). The terminal device in any one of the embodiments in the disclosure may be referred to as User Equipment (UE), a Mobile Station (MS), a Mobile Terminal (MT), a user unit, a user station, a mobile node, a remote station, a remote terminal, a mobile device, a user terminal, a terminal, a wireless communication device, a user agent or a user apparatus. The terminal device in any one of the embodiments in the disclosure may include one or a combination of at least two of the following: an Internet of Things (IoT) device, a satellite terminal, a Wireless Local Loop (WLL) station, a Personal Digital Processing (PDA) device, a handheld device with a wireless communication function, a computing device or other processing devices connected to a wireless modem, a server, a mobile phone, a tablet computer (or Pad), a computer with a wireless transceiver function, a handheld computer, a desktop computer, a PDA, a portable media player, a smart speaker, a navigation apparatus, a wearable device (such as a smart watch, smart glasses, or a smart necklace), a pedometer, a digital TV, a Virtual Reality (VR) terminal device, an Augmented Reality (AR) terminal device, a wireless terminal device in industrial control, a wireless terminal device in self driving, a wireless terminal device in remote medical surgery, a wireless terminal device in a smart grid, a wireless terminal device in transportation safety, a wireless terminal device in a smart city, a wireless terminal device in a smart home, and a vehicle, an on-board device, an on-board module, a wireless modem, a handheld device, a Customer Premise Equipment (CPE), a smart home appliance in a vehicle to everything (V2X) system, and the like.

Optionally, the terminal may be any terminal device, which includes but is not limited to a terminal device in wired or wireless connection with the network device or other terminal devices.

Optionally, the terminal device may be used for a device to device (D2D) communication.

In any one of the embodiments in the disclosure, the access network device may include one or a combination of at least two of the following: an Evolutional Node B (eNB or eNodeB) in the LTE system, a Next Generation Radio Access Network (NG RAN) device, a base station (gNB) in the NR system, a small station, a micro station, a radio controller in a Cloud Radio Access Network (CRAN), an access point of the Wi-Fi, a transmission reception point (TRP), a relay station, an access point, an on-board device, a wearable device, a hub, a switch, a bridge, a router, a network device in a future evolved Public Land Mobile Network (PLMN), and the like.

In any one of the embodiments in the disclosure, the core network device may be a 5thGeneration (5G) core (5GC) device. In any one of the embodiments in the disclosure, the core network device may include one or a combination of at least two of the following: a Sensing Function, an Access and Mobility Management Function (AMF), an Authentication Server Function (AUSF), a User Plane Function (UPF), or a Session Management Function (SMF), a Location Management Function (LMF) and a Policy Control Function (PCF). In other embodiments, the core network device may also be an Evolved Packet Core (EPC) device in the LTE network, for example, a Session Management Function + Core Packet Gateway (SMF+PGW-C) device. It should be understood that the SMF+PGW-C can achieve functions that can be achieved by the SMF and the PGW-C. In the process of the network evolution, the core network device may also be referred to as other names, or may be a new network entity formed by dividing the functions of the core network, which would not be limited in the embodiments of the present disclosure.

Connections can be established between various functional units in the communication system through Next Generation (NG) interfaces for achieving communication.

For example, the terminal device establishes air interface connection with the access network device through an NR interface for transmission of user plane data and control plane signaling. The terminal device may establish a control plane signaling connection with the AMF through an NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through an NG interface 6 (N6 for short). The AMF may establish a control plane signaling connection with the SMF through an NG interface 11 (N11 for short). The SMF may establish a control plane signaling connection with the PCF through an NG interface 7 (N7 for short).

FIG. 1 exemplarily illustrates one base station, one core network device and two terminal devices. Optionally, the wireless communication system 100 may include multiple base station devices, and the respective number of terminal devices may be included within the coverage area of each base station device, which would not be limited in embodiments of the present disclosure.

It should be noted that FIG. 1 only illustrates, by way of an example, the system to which the present disclosure is applied. Of course, the methods illustrated in the embodiments of the present disclosure may also be applied to other systems. In addition, the terms "system" and "network" in the present disclosure may usually be used interchangeably. In the disclosure, the term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship. It should also be understood that the term "indication/indicate/indicating" mentioned in the embodiments of the disclosure may be a direct indication, or may be an indirect indication, or may represent existence of an association relationship. For example, A indicates B, which may represent that A directly indicates B, for example, B may be obtained by A; or may represent that A indirectly indicates B, for example, A indicates C, and B may be obtained by C; or may represent that an association relationship exists between A and B. It should also be understood that the term "corresponding/correspondence/correspond" mentioned in the embodiments of the present disclosure may indicate that there are direct or indirect correspondences between two objects, or may indicate that there is an association relationship between the two objects, or may have an indicating and being indicated relationship, a configuring and being configured relationship, or the like. It should also be understood that the terms "predefined/predefinition", "predefined by a protocol", "pre-determined/predetermination" or "predefined rules" mentioned in the embodiments of the present disclosure may be implemented by pre-storing corresponding codes or tables or other means that may be used to indicate relevant information in devices (e.g., including terminal devices and network devices), specific implementations of which are not limited herein. For example, the "predefined" may refer to what is defined in protocol. It should also be understood that in the embodiments of the present disclosure, the "protocol" may refer to standard protocols in the communication field, and may include, for example, an LTE protocol, an NR protocol and related protocols applied in future communication systems, which are not limited in the present disclosure.

For convenience of understanding of the technical solutions of the embodiments of the disclosure, related technologies in the embodiments of the disclosure are described as follows. The following related technologies may be used as alternative solutions and may be combined with the technical solutions of the embodiments of the disclosure in various ways, all of which belong to the scope of protection of the embodiments of the disclosure.

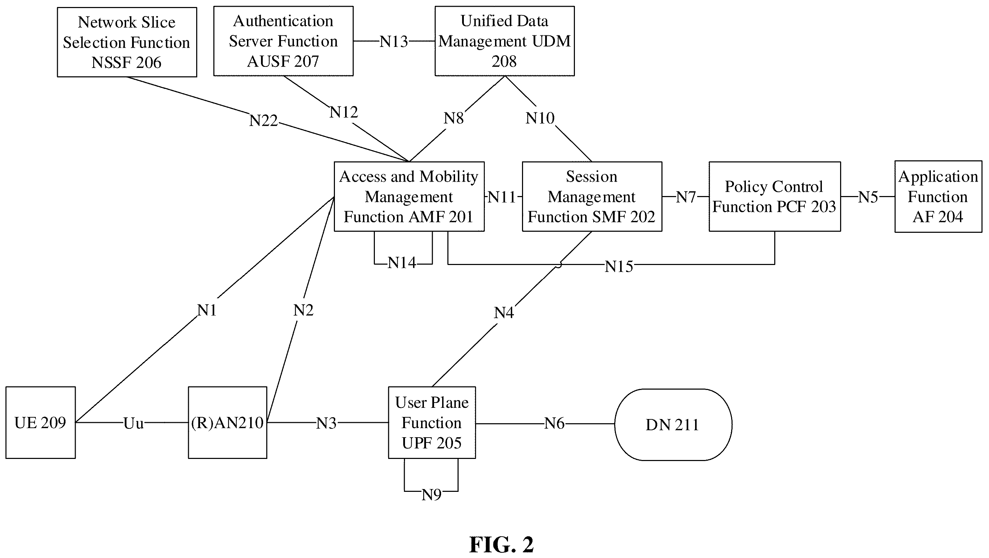

FIG. 2 is a diagram of a system architecture based on a presentation manner of reference points provided in an embodiment of the disclosure. As illustrated in FIG. 2, the presentation manner of the reference points may illustrate that interactions may exist between corresponding Network Function (NF) services. The NFs include, for example, an AMF 201, a SMF 202, a PCF 203, an Application Function (AF) 204, a UPF 205, a Network Slice Selection Function (NSSF) 206, an AUSF 207, and a Unified Data Management (UDM) 208. The system may also include a UE 209, a Radio Access Network (RAN) or an Access Node (AN) 210, and a Data Network (DN) 211.

FIG. 2 illustrates the following reference points: N1 (between the UE 209 and the AMF 201), N2 (between the RAN 210 and the AMF 201), N3 (between the RAN 210 and the UPF 205), N4 (between the SMF 202 and the UPF 205), N5 (between the PCF 203 and the AF 204), N6 (between the UPF 205 and the DN 211), N7 (between the SMF 202 and the PCF 203), N8 (between the UDM 208 and the AMF 201), N9 (between two UPFs 205), N10 (between the UDM 208 and the AMF 202), N11 (between the AMF 201 and the SMF 202), N12 (between the AUSF 207 and the AMF 201), N13 (between the AUSF 207 and the UDM 208), N14 (between two AMFs 201), N15 (between the PCF 203 and the AMF 201 in case of a non-roaming scenario, or between the PCF 203 and the AMF 201 of the visited network in case of a roaming scenario), N16 (between two SMFs, not illustrated), and N22 (between the AMF 201 and the NSSF 206).

SMF, PCF, and AF are described as follows.

The SMF includes establishment, modification and release of a session, tunnel maintenance between the UPF node and the AN node, UE Internet Protocol (IP) address allocation and management, functions of selecting and controlling the UPF, charging data collection and charging interface support, and the like.

The PCF supports a unified policy frame to manage network behaviors and provide operator network control policies to other network elements and terminals.

The AF may be an internal application (such as IP Multimedia Subsystem (IMS)) of the operator, or a third-party service (such as a web service, a video or a game). If the AF is internal one of the operator and is in the same trusted domain as other NFs, the AF directly interacts with and accesses the other NFs. If the AF is not in the trusted domain, the Network Exposure Function (NEF) is required to access the other NFs.

The UE performs an access stratum connection with the AN through an Uu interface to exchange access stratum messages and perform wireless data transmission. The UE performs a Non-Access Stratum (NAS) connection with the AMF through the N1 interface to exchange NAS messages. The AMF is a mobility management function in the core network, and the SMF is a session management function in the core network. In addition to performing the mobility management for the UE, the AMF is also responsible for forwarding messages related to the session management between the UE and the SMF. The PCF is a policy management function in the core network, and is responsible for formulating, for the UE, policies related to the mobility management, the session management, the charging, and the like. The UPF is a user plane function in the core network. The UPF performs data transmission with the external data network through the N6 interface and performs data transmission with the AN through the N3 interface.

Networks in the related art, such as cellular networks like 5G, are used only for communication. However, the radio electromagnetic wave signals used in the cellular networks can not only be used for wireless data transmission and communication, but also have environmental sensing capabilities, such as user action or gesture recognition, breathing monitoring, measurement of the terminal movement speed, environment imaging, and weather detection. Therefore, the cellular networks can be considered not only for communication and data transmission, but also for the acquisition of sensing information.

Beyond 5th Generation (B5G) or later networks may support sensing capabilities. By adding sensing network elements (i.e., Sensing Functions) and corresponding processes, sensing functions are supported in the 3rd Generation Partnership Project (3GPP) network. Optionally, the sensing network elements may include a Sensing Function (SF) network element.

Optionally, in any one of the embodiments in the disclosure, the SF network element, the SF, and the SF entity may be understood in the same manner. Optionally, in any one of the embodiments in the disclosure, the AMF network element, the AMF, and the AMF entity may be understood in the same manner.

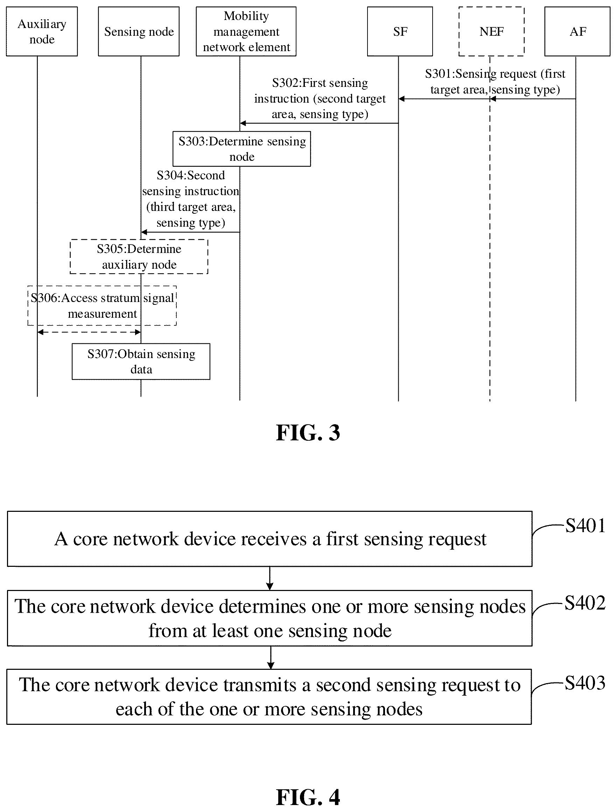

FIG. 3 is a flowchart of a sensing operation method provided in an embodiment of the disclosure. As illustrated in FIG. 3, the method includes operations S301 to S307.

At the operation S301, an AF transmits a sensing request to an SF.

Optionally, the sensing request may include a first target area and a sensing type. Optionally, the AF may transmit the sensing request to the SF through the NEF.

At the operation S302, the SF transmits a first sensing instruction to a mobility management network element.

Optionally, the first sensing instruction may include a second target area and the sensing type. Optionally, the mobility management network element may include an AMF.

At the operation S303, the mobility management network element determines a sensing node.

Optionally, the mobility management network element may determine the sensing node based on the second target area and/or the sensing type. Optionally, the sensing node may include a sensing access network device and/or a sensing terminal device. Optionally, the sensing access network device may be the access network device described above. Optionally, the sensing terminal device may be the terminal device described above.

At the operation S304, the mobility management network element transmits a second sensing instruction to the sensing node.

Optionally, the second sensing instruction includes a third target area and/or the sensing type.

At the operation S305, the sensing node determines an auxiliary node.

Optionally, the auxiliary node may include an auxiliary terminal device and/or an auxiliary access network device. Optionally, the auxiliary terminal device may be the terminal device described above. Optionally, the auxiliary access network device may be the access network device described above.

At the operation S306, the sensing node and/or the auxiliary node may perform access stratum signal measurement.

Optionally, an access stratum signal may include a reference signal. Optionally, in any one of the embodiments in the disclosure, the reference signal may include at least one of: a reference signal between access network devices, an uplink reference signal, a downlink reference signal, or a sidelink reference signal. In some embodiments, the uplink reference signal includes at least one of: a Sounding Reference Signal (SRS), a DeModulation Reference Signal (DMRS), or a Phase Tracking Reference Signal (PTRS). In some embodiments, the downlink reference signal includes at least one of: a Channel State Information-Reference Signal (CSI-RS), a DeModulation Reference Signal (DMRS), or a Cell-specific Reference Signal (CRS).

At the operation S307, the sensing node obtains sensing data.

In the embodiment corresponding to FIG. 3, when an application (corresponding to the AF described above) transmits the sensing request for the target UE/object (corresponding to the sensed object described above) to the core network of the 3GPP network, the core network selects a sensing node through the sensing function network element or the AMF, and triggers the sensing node to activate the capability of the sensing-related wireless measurement, so that the sensing node initiates the measurement for sensing information and generates a sensing result (i.e., the sensing data described above).

The main wireless sensing scenarios for the Integrated Sensing and Communication include at least one of: 1) access network device echo sensing link: an access network device transmits a sensing signal and receives an echo signal; 2) sensing link between access network devices: an access network device B receives a sensing signal transmitted by an access network device A; 3) uplink air interface sensing link: an access network device receives a sensing signal transmitted by a terminal device; 4) downlink air interface sensing link: a terminal device receives a sensing signal transmitted by an access network device; 5) terminal device echo sensing link: a terminal device transmits a sensing signal and receives an echo signal; or 6) sensing link between terminal devices: a terminal device B receives a sensing signal transmitted by a terminal device A.

The communication methods in the embodiments of the disclosure may be applied to any one or more of the listed scenarios for the Integrated Sensing and Communication described above. In B5G Integrated Sensing and Communication, sensing behavior may be performed in consideration of reusing air interface signals already defined in the protocol.

The embodiment corresponding to FIG. 3 provides a process for Per-Area sensing. For the Per-Area sensing, the sensing target is a specific area or object that does not belong to 3GPP without specific UE association, belonging to "passive sensing".

If the sensing target belongs to the Per-Area sensing (or passive sensing), it is necessary to find a suitable sensing node for the target area. For the sensing scenarios in which only the access network device participate (such as the access network device echo sensing, the sensing between access network devices), the sensing nodes existing around the target area needs to be found during the sensing node selection. At present, assuming that the sensing function/AMF network element knows the locations of all sensing nodes, the SF/AMF directly selects a suitable sensing node in or nearby the target area. However, multiple sensing nodes may have the signal coverage over the target area, but there is no specific discussion on how to select a suitable sensing node for delivering sensing tasks.

For a sensing scenario in which the sensing target belongs to the Per-Area, the SF/AMF network element of the core network device is responsible for selecting a suitable gNB/UE around the target area as the sensing node. However, in the related art, when the SF and the AMF discover multiple gNBs/UEs capable of sensing a specified area, how to select a gNB/UE has not been discussed.

For convenience of understanding of the technical solutions of the embodiments of the disclosure, the technical solutions of the disclosure will be described in detail below with reference to specific embodiments. The above related technologies may be used as alternative solutions and may be combined with the technical solutions of the embodiments of the disclosure in various ways, all of which belong to the scope of protection of the embodiments of the disclosure. The embodiments of the disclosure include at least part of the following contents.

FIG. 4 is a flowchart of a communication method provided in an embodiment of the disclosure. As illustrated in FIG. 4, the method includes operations S401 to S403.

At the operation S401, a core network device receives a first sensing request.

Optionally, the core network device receives the first sensing request, which may include that: the core network device receives the first sensing request transmitted by a Consumer Network Function (Consumer NF) entity. Optionally, the core network device receives the first sensing request, which may include that: the core network device receives the first sensing request transmitted by an AF, an AMF, an access network device, a terminal device, or other core network devices listed above.

Optionally, in any one of the embodiments in the disclosure, the Consumer NF entity and the Consumer NF may be understood in the same manner.

At the operation S402, the core network device determines one or more sensing nodes from at least one sensing node.

Optionally, the at least one sensing node includes one or more sensing nodes. Optionally, the one or more sensing nodes may be selected from the at least one sensing node.

Optionally, in any one of the embodiments in the disclosure, any one of the sensing nodes may include a terminal device or an access network device.

Optionally, each of the one or more sensing nodes is configured to perform a sensing task determined based on first information or to sense a sensed object corresponding to first information. Optionally, each of the at least one sensing node is configured to perform the sensing task determined based on the first information, or to sense the sensed object corresponding to the first information. Optionally, the at least one sensing node is configured to perform a sensing task determined based on second information, or to sense a sensed object corresponding to second information. Optionally, the second information may include the first information. Optionally, the one or more sensing nodes are configured to perform a sensing task determined based on part of the second information, or to sense a sensed object corresponding to part of the second information.

At the operation S403, the core network device transmits a second sensing request to each of the one or more sensing nodes.

In the embodiments of the disclosure, the core network device receives a first sensing request, the core network device determines one or more sensing nodes from at least one sensing node, and the core network device transmits a second sensing request to each of the one or more sensing nodes. In this way, the one or more sensing nodes for performing the sensing tasks are determined by the core network device, thereby improving the flexibility for sensing node determination. Moreover, the sensing tasks are performed by the one or more sensing nodes, thereby improving the reliability for performing the sensing tasks, and reducing the overhead of the communication system.

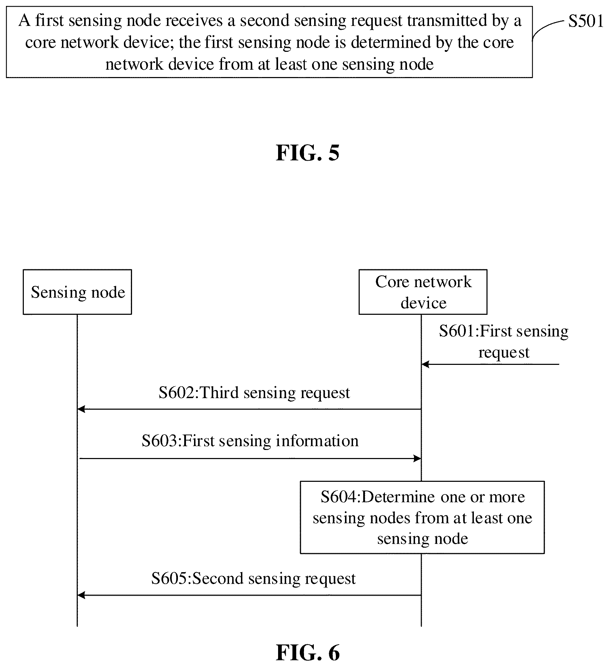

FIG. 5 is a flowchart of another communication method provided in an embodiment of the disclosure. As illustrated in FIG. 5, the method includes the following an operation S501.

At the operation S501, a first sensing node receives a second sensing request transmitted by a core network device. The first sensing node is determined by the core network device from at least one sensing node.

Optionally, the first sensing node may be any one of the one or more sensing nodes described above. Optionally, the first sensing node may include a terminal device or an access network device.

Optionally, after the operation S501, the first sensing node may perform a sensing task based on the second sensing request, to obtain second sensing information (i.e., sensing information corresponding to the second sensing request). Optionally, the first sensing node may further report the second sensing information to the core network device or report information determined based on the second sensing information to the core network. Optionally, the core network device may transmit the second sensing information or the information determined based on the second sensing information to the Consumer NF entity.

In some embodiments, the sensing node is configured to perform a sensing task determined based on first information. The first information includes at least one of: first area information, first location information, a first sensed object set, or a first sensed feature. For example, each of the at least one sensing node is configured to perform the sensing task determined based on the first information. For example, each of the one or more sensing nodes is configured to perform the sensing task determined based on the first information.

Optionally, the sensing node is configured to perform the sensing task determined based on the first information, which may include that: the sensing node is configured to sense at least one of: a sensed object in the first area information, a sensed object in the first location information, a sensed object in the first sensed object set, or a sensed object corresponding to the first sensed feature.

Optionally, in any one of the embodiments in the disclosure, any area information (for example, any one of the first area information, second area information, third area information, fourth area information, or fifth area information) may include at least one of: (1) reference point coordinates and a radius; (2) reference point coordinates, an area length and an area width; (3) one or more Zone identifiers (IDs); or (4) a 3GPP area identifier. Optionally, the Zone ID is used for indicating a geographical area. Optionally, the method for determining the Zone ID may refer to any one of the methods for determining the Zone ID in the related art. Optionally, the 3GPP area identifier may include at least one of: a Cell ID, a Tracking Area ID, or the like.

Optionally, in any one of the embodiments of the disclosure, the coordinates may include at least one of: latitude and longitude coordinates, two-dimensional coordinates, three-dimensional coordinates, or the like.

Optionally, in any one of the embodiments in the disclosure, any location information (for example, any one of the first location information, second location information, third location information, fourth location information, or fifth location information) may include at least one of: location coordinates, a location identifier, or a location name.

Optionally, in any one of the embodiments in the disclosure, any sensed object set (e.g., any one of the first sensed object set, second sensed object set, third sensed object set, fourth sensed object set, or fifth sensed object set) may include one or more sensed objects. Alternatively, the sensed objects included in different sensed object sets may be the same or may partially overlap or may not overlap. Optionally, the sensed object may include at least one of: a person, an animal, an object, a space, a geographical area, or the like.

Optionally, in any one of the embodiments in the disclosure, any sensed feature (e.g., any one of the first sensed feature, second sensed feature, third sensed feature, fourth sensed feature, or fifth sensed feature) may include one or more features. Alternatively, features included in different sensed features may be the same or may partially overlap or may not overlap. Optionally, the feature(s) included in the sensed feature may include at least one of: a shape, color, a size, one or more types of human features, one or more kinds of object features, one or more animal features, or the like.

In some embodiments, the second sensing request includes at least one of: first information, a first sensing manner, a first sensing service type, or a first sensing service requirement. The first information includes at least one of: first area information, first location information, a first sensed object set, or a first sensed feature.

Optionally, in a case where each of the one or more sensing nodes receives the second sensing request, each of the one or more sensing nodes may perform a sensing task corresponding to the second sensing request based on the second sensing request. For example, each of the one or more sensing nodes may perform sensing based on at least one of: the first information, the first sensing manner, the first sensing service type, or the first sensing service requirement.

In some embodiments, the first sensing request includes at least one of: second information, a first sensing manner, a first sensing service type, or a first sensing service requirement. The second information includes at least one of: second area information, second location information, a second sensed object set, or a second sensed feature.

Optionally, the second information may include the first information. For example, the second area information includes the first area information, and/or the second location information includes the first area information, and/or the second sensed object set includes the first sensed object set, and/or the second sensed feature includes the first sensed feature.

Optionally, the second information may include N types of information, N is an integer greater than or equal to 1, and the first information may be one type of information among the N types of information. Optionally, the N types of information may correspond one-to-one to N types of sensing nodes.

Optionally, the second information may correspond to N types of sensing nodes, and different sensing nodes among the N types of sensing nodes may correspond to different information among the N types of information in the second information. Optionally, the first information may correspond to one type of sensing node. For example, the N types of sensing nodes include a first type of sensing node and a second type of sensing node. The first type of sensing node is configured to perform a sensing task determined based on the first area information and the second type of sensing node is configured to perform a sensing task determined based on sixth area information. The first area information and the sixth area information are both included in the second area information in the first sensing request, and the first area information and the sixth area information do not overlap or partially overlap.

For example, the N types of sensing nodes are configured to perform sensing tasks determined based on the second information. Optionally, in the case of receiving the first sensing request, the core network device may divide the second information corresponding to the N types of sensing nodes into N types of information, where the N types of information correspond one-to-one to the N types of sensing nodes, so that the core network device transmits the respective one type of information to each of the N types of sensing nodes. Optionally, the at least one sensing node is included in one type of sensing node. For example, the at least one sensing node is included in the first type of sensing node. Optionally, the one or more sensing nodes are included in one type of sensing node. For example, the one or more sensing nodes are included in the first type of sensing node.

Optionally, the method further includes that: the core network device converts the second information to obtain fifth information, and determines the at least one sensing node based on the fifth information. The fifth information includes at least one of: fifth area information, fifth location information, or a fifth sensed object.

Optionally, the method further includes that: the core network device determines the at least one sensing node based on the second information.

Optionally, the core network device converts the second information to obtain the fifth information, which includes that: the core network device locally converts the second information to obtain the fifth information.

Optionally, the core network device converts the second information to obtain the fifth information, which includes that: the core network device transmits a query request including the second information to a second network element, and receives the fifth information transmitted by the second network element.

Optionally, the fifth area information includes one of: reference point coordinates and a radius; reference point coordinates, an area length and an area width; Zone ID(s) for indicating zone(s); a Cell ID or Tracking Area ID.

Optionally, the at least one sensing node is locally determined by the core network device.

Optionally, the at least one sensing node is obtained by the core network device through querying a third network element.

Optionally, in any one of the embodiments in the disclosure, the first network element, the second network element, or the third network element may be any one of the network elements listed above; or, the first network element, the second network element, or the third network element may be an AMF, a Unified Data Repository (UDR), a UDM, or the like.

In some embodiments, at the corresponding core network device side, the method further includes that: the core network device transmits a third sensing request to each of the at least one sensing node. Optionally, each of the at least one sensing node may receive the third sensing request transmitted by the core network device.

In some embodiments, at the corresponding first sensing node side, the method further includes that: the first sensing node receives the third sensing request transmitted by the core network device.

Optionally, before the core network device determines the one or more sensing nodes from the at least one sensing node, the core network device may perform that: the core network device transmits a third sensing request to each of the at least one sensing node. Optionally, the third sensing request is used for the core network device to determine the one or more sensing nodes from the at least one sensing node.

In some embodiments, the third sensing request includes at least one of: third information, a first sensing mode, a first sensing service type, or a second sensing service requirement.

The third information includes at least one of: third area information, third location information, a third sensed object set, or a third sensed feature. The third information is contained in first information included in the second sensing request.

The second sensing service requirement is lower than or equal to the first sensing service requirement included in the second sensing request.

Optionally, the third information is contained in the first information included in the second sensing request, which may include that: the third area information is contained in the first area information, and/or the third location information is contained in the first location information, and/or the third sensed object set is contained in the first sensed object set, and/or the third sensed feature is contained in the first sensed feature.

Optionally, the second sensing service requirement is lower than or equal to the first sensing service requirement included in the second sensing request, which may include that: meeting the second sensing service requirement is relatively easier than meeting the first sensing service requirement. Optionally, the second sensing service requirement is lower than or equal to the first sensing service requirement, which may include at least one of: a sensing duration in the second sensing service requirement is less than or equal to a sensing duration in the first sensing service requirement; a sensing frequency in the second sensing service requirement is less than or equal to a sensing frequency in the first sensing service requirement; a reporting frequency in the second sensing service requirement is less than or equal to a reporting frequency in the first sensing service requirement; precision information in the second sensing service requirement is less than or equal to precision information in the first sensing service requirement; accuracy information in the second sensing service requirement is less than or equal to accuracy information in the first sensing service requirement; false alarm rate information in the second sensing service requirement is higher than or equal to false alarm rate information in the first sensing service requirement; sensing time information in the second sensing service requirement is less than or equal to sensing time information in the first sensing service requirement; or sensing dimension information in the second sensing service requirement is lower than or equal to sensing dimension information in the first sensing service requirement.

Optionally, the sensing time information may include at least one of: sensing starting time information, sensing ending time information, or time information for each sensing. Exemplarily, the greater sensing time information indicates at least one of: smaller sensing starting time information, larger sensing ending time information, or a higher number of times of sensing.

In some embodiments, the third sensing request is determined by the core network device based on the received first sensing request.

Optionally, the third information is determined by the core network device based on the second information in the first sensing request. Optionally, the second sensing service requirement is determined based on the first sensing service requirement in the first sensing request.

Optionally, the core network device may directly determine the third information based on the second information. Optionally, the core network device may determine the first information corresponding to the at least one sensing node or the one or more sensing nodes based on the second information, and determine the third information based on the first information.

In some embodiments, at the corresponding core network device side, the method further includes that: the core network device receives first sensing information transmitted by each of the at least one sensing node. Optionally, each of the at least one sensing node may transmit the first sensing information to the core network device.

In some embodiments, at the corresponding first sensing node side, the method further includes that: the first sensing node transmits the first sensing information to the core network device.

In some embodiments, the first sensing information is used for determining the one or more sensing nodes from the at least one sensing node. Optionally, the first sensing information is used for the core network device to determine the one or more sensing nodes from the at least one sensing node.

Optionally, the first sensing information transmitted by each of the at least one sensing node to the core network device may be a sensing result obtained by the each sensing node through performing sensing based on the third sensing request, or information determined based on the sensing result obtained through performing the sensing.

Optionally, after the core network device transmits the third sensing request to each of the at least one sensing node, each of the at least one sensing node performs sensing based on the third sensing request to obtain the first sensing information. Each of the at least one sensing node transmits the first sensing information to the core network device.

Optionally, the core network device receives the first sensing information transmitted by each of the at least one sensing node, which may be performed before the core network device receives the first sensing request. In this way, in a case where the core network device receives the first sensing request, the core network device may obtain the received first sensing information, and determine the one or more sensing nodes from the at least one sensing node based on the first sensing information.

Optionally, the first sensing information may be determined by each of the at least one sensing node based on the third sensing request and reported to the core network device. Optionally, the first sensing information may be reported by each of the at least one sensing node to the core network device before the core network device receives the first sensing request. Optionally, the first sensing information may be periodically or aperiodically reported to the core network device by each of the at least one sensing node. Optionally, in a case of periodically or aperiodically reporting to the core network device, the first sensing information may be sensed and determined based on sensing configuration information transmitted by the core network device, or the first sensing information may be sensed and determined based on sensing configuration information that is pre-configured or predefined by a protocol. Optionally, the sensing configuration information may include: target area information, target location information, a target sensing object set, and a target sensing feature. Optionally, the sensing configuration information corresponding to different sensing nodes may be the same or partially the same or completely different.

In some embodiments, the first sensing information includes at least one of: location information, point cloud information, signal measurement information, Line Of Sight (LOS) indication information, or Non Line of Sight (NLOS) indication information.

Optionally, the location information in the first sensing information may include location information of a sensed object corresponding to the third sensing request or the sensing configuration information. Optionally, the point cloud information in the first sensing information may include point cloud information of the sensed object corresponding to the third sensing request or the sensing configuration information. Optionally, the signal measurement information may include: a measurement result obtained by the sensing node through measuring a reference signal in a cell and/or a reference signal transmitted by a terminal device.

Optionally, the measurement information in any one of the embodiments in the disclosure may include at least one of: Reference Signal Received Power (RSRP), Reference Signal Received Quality (RSRQ), Received Signal Strength Indicator (RSSI), Signal to Interference plus Noise Ratio (SINR), Received Signal Code Power (RSCP), or Signal Noise Ratio (SNR).

Optionally, the LOS indication information and/or the NLOS indication information in the first sensing information may be determined based on sensing information (for example, at least one of: location information, point cloud information, or signal measurement information) which is obtained by each sensing node through performing sensing based on the third sensing request or the sensing configuration information.

Optionally, the first sensing information may not include the LOS indication information and/or the NLOS indication information, and the core network device may determine the LOS indication information and/or the NLOS indication information based on at least one of: location information, point cloud information, or signal measurement information included in the first sensing information transmitted by each sensing node.

Optionally, the core network device may determine, based on part or all of the first sensing information, at least one of: precision information, accuracy information, or false alarm rate information corresponding to the first sensing information. Optionally, the at least one of the precision information, the accuracy information, or the false alarm rate information corresponding to the first sensing information may include at least one of precision information, accuracy information, or false alarm rate information based on which the first sensing information is sensed.

Optionally, the precision information corresponding to the first sensing node may include precision information corresponding to the third sensing request or the sensing configuration information, and/or the precision information corresponding to the first sensing node may be higher than or equal to the precision information corresponding to the third sensing request or the sensing configuration information.

Optionally, the accuracy information corresponding to the first sensing node may include accuracy information corresponding to the third sensing request or the sensing configuration information, and/or the accuracy information corresponding to the first sensing node may be higher than or equal to the accuracy information corresponding to the third sensing request or the sensing configuration information.

Optionally, the false alarm rate information corresponding to the first sensing node may include false alarm rate information corresponding to the third sensing request or the sensing configuration information, and/or the false alarm rate information corresponding to the first sensing node may be lower than or equal to the false alarm rate information corresponding to the third sensing request or the sensing configuration information.

FIG. 6 is a flowchart of yet another communication method provided in an embodiment of the disclosure. As illustrated in FIG. 6, the method includes the following operations S601 to S605.

At the operation S601, a core network device receives a first sensing request.

At the operation S602, the core network device transmits a third sensing request to each of at least one sensing node.

At the operation S603, the core network device receives first sensing information transmitted by each of the at least one sensing node.

Optionally, the first sensing information is used for determining one or more sensing nodes from the at least one sensing node.

At the operation S604, the core network device determines one or more sensing nodes from the at least one sensing node.

At the operation S605, the core network device transmits a second sensing request to each of the one or more sensing nodes.

In some embodiments, at the corresponding core network device side, the method further includes that: the core network device transmits a first request to each of the at least one sensing node. The first request is used for requesting measurement information. Optionally, each of the at least one sensing node may receive the first request transmitted by the core network device.

In some embodiments, at the corresponding first sensing node side, the method further includes that: the first sensing node receives the first request transmitted by the core network device. The first request is used for requesting measurement information.

Optionally, each of the at least one sensing node may perform measurement based on the first request to obtain a measurement result.

Optionally, before the core network device determines the one or more sensing nodes from the at least one sensing node, the core network device may perform that: the core network device transmits a first request to each of the at least one sensing node. Optionally, the first request is used for the core network device to determine the one or more sensing nodes from the at least one sensing node.

Optionally, the first request transmitted by the core network device to each sensing node may include at least one of: frequency point information measured by each sensing node, a frequency range measured by each sensing node, a Cell ID of a cell measured by each sensing node, signal information of a cell or a terminal device measured by each sensing node, or an identifier of a terminal device measured by each sensing node. Optionally, the signal information may include one of: signal power, signal power range, or indication information of whether a LOS path exists. Optionally, each of the at least one sensing node may perform measurement based on the first request to obtain the measurement information. Optionally, each of the at least one sensing node may perform measurement based on measurement configuration information predefined by a protocol or pre-configured measurement configuration information to obtain the measurement information.

In some embodiments, at the corresponding core network device side, the method further includes that: the core network device receives measurement information transmitted by each of the at least one sensing node. Optionally, each of the at least one sensing node may transmit the measurement information to the core network device.

In some embodiments, at the corresponding first sensing node side, the method further includes that: the first sensing node transmits the measurement information to the core network device.

Optionally, the measurement information is used for determining the one or more sensing nodes from the at least one sensing node. Optionally, the measurement information is used for the core network device to determine the one or more sensing nodes from the at least one sensing node. Optionally, the measurement information and assistance information are used for determining the one or more sensing nodes from the at least one sensing node. Optionally, the measurement information and assistance information are used for the core network device to determine the one or more sensing nodes from the at least one sensing node.

Optionally, the measurement information transmitted by each of the at least one sensing node to the core network device may be a measurement result obtained by each sensing node through performing measurement based on the first request, or information determined based on the measurement result obtained through performing measurement.

Optionally, after the core network device transmits the first request to each of the at least one sensing node, each of the at least one sensing node performs measurement based on the first request to obtain a measurement result, and each of the at least one sensing node transmits the measurement result to the core network device.

Optionally, the core network device receives the measurement information transmitted by each of the at least one sensing node, which may be performed before the core network device receives the first sensing request. In this way, in a case where the core network device receives the first sensing request, the core network device may obtain the received measurement information, and determine the one or more sensing nodes from the at least one sensing node based on the measurement information or based on the measurement information and the assistance information.

Optionally, the measurement information may be determined by each of the at least one sensing node based on the first request and reported to the core network device. Optionally, the measurement information may be reported by each of the at least one sensing node to the core network device before the core network device receives the first sensing request. Optionally, the measurement information may be periodically or aperiodically reported to the core network device by each of the at least one sensing node. Optionally, in a case of periodically or aperiodically reporting to the core network device, the measurement information may be sensed and determined based on measurement configuration information transmitted by the core network device, or the measurement information may be sensed and determined based on measurement configuration information that is pre-configured or predefined by a protocol. Optionally, the measurement configuration information corresponding to each sensing node may include: frequency point information measured by each sensing node, a frequency range measured by each sensing node, a Cell ID of a cell measured by each sensing node, and an identifier of a terminal device measured by each sensing node. Optionally, the measurement configuration information corresponding to different sensing nodes may be the same or partially the same or completely different.

In some embodiments, at the corresponding core network device side, the method further includes that: the core network device transmits a second request to each of the at least one sensing node. The second request is used for requesting assistance information. Optionally, each of the at least one sensing node may receive the second request transmitted by the core network device.

In some embodiments, at the corresponding first sensing node side, the method further includes that: the first sensing node receives the second request transmitted by the core network device. The second request is used for requesting assistance information.

Optionally, before the core network device determines the one or more sensing nodes from the at least one sensing node, the core network device may perform that: the core network device transmits the second request to each of the at least one sensing node. Optionally, the second request is used for the core network device to determine the one or more sensing nodes from the at least one sensing node.

Optionally, the first request and the second request may be transmitted in the same signaling, or the first request and the second request may be transmitted in different signalings. Optionally, the first request may be transmitted before transmitting the second request, or the first request may be transmitted after transmitting the second request.

Optionally, the first request and/or the second request may be transmitted after the core network device receives the first sensing request. Optionally, the first request and/or the second request may be transmitted before the core network device receives the first sensing request.

In some embodiments, at the corresponding core network device side, the method further includes at least one of: the core network device receives the assistance information transmitted by each of the at least one sensing node; the core network device locally obtain the assistance information; or the core network device obtains the assistance information from a first network element.

In some embodiments, at the corresponding first sensing node side, the method further includes that: the first sensing node transmits the assistance information to the core network device.

Optionally, the assistance information transmitted by each of the at least one sensing node to the core network device may be determined by the each sensing node based on the second request.

Optionally, after the core network device transmits the second request to each of the at least one sensing node, each of the at least one sensing node determines the assistance information based on the second request, and each of the at least one sensing node transmits the assistance information to the core network device.

Optionally, the core network device receives the assistance information transmitted by each of the at least one sensing node, which may be performed before the core network device receives the first sensing request. In this way, in a case where the core network device receives the first sensing request, the core network device may obtain the received assistance information, and determine the one or more sensing nodes from the at least one sensing node based on the assistance information or based on the measurement result and the assistance information.

Optionally, the assistance information may be determined by each of the at least one sensing node based on the second request and reported to the core network device. Optionally, the assistance information may be reported by each of the at least one sensing node to the core network device before the core network device receives the first sensing request. Optionally, the assistance information may be periodically or aperiodically reported to the core network device by each of the at least one sensing node. Optionally, in a case of periodically or aperiodically reporting to the core network device, the assistance information may be determined based on preset configuration information transmitted by the core network device, or the assistance information may be determined based on preset configuration information that is pre-configured or predefined by a protocol. Optionally, the preset configuration information corresponding to different sensing nodes may be the same or partially the same or completely different.

In some embodiments, the measurement information includes at least one of: a measurement result obtained by measuring a signal in a cell and/or a signal transmitted by a terminal device, information determined based on the measurement result obtained by measuring the signal in the cell and/or the signal transmitted by the terminal device, or identification information of the measured cell and/or terminal device.

Optionally, the signal in the cell may include a reference signal in the cell. Optionally, the signal transmitted by the terminal device may include a reference signal transmitted by the terminal device. Optionally, the signal in the cell may include a reference signal between access network devices and/or a downlink reference signal. Optionally, the signal transmitted by the terminal device may include a sidelink reference signal and/or an uplink reference signal.

Optionally, the information determined based on the measurement result obtained by measuring the signal in the cell and/or the signal transmitted by the terminal device may include at least one of: a distance between the sensing node and the access network device corresponding to the measured cell, a distance between the sensing node and the measured terminal device, whether signal propagation between the sensing node and the access network device corresponding to the measured cell is LOS propagation, or whether signal propagation between the sensing node and the access network device corresponding to the measured cell is NLOS propagation, or the like.

In some embodiments, the assistance information includes at least one of: identification information of each of the at least one sensing node, cell identification information and/or terminal device identification information corresponding to each of the at least one sensing node, identification information of another sensing node, or cell identification information and/or terminal device identification information corresponding to the another sensing node.

Optionally, the core network device transmits the second request to each sensing node, and the core network device receives the assistance information transmitted by each sensing node. Optionally, the assistance information transmitted by each sensing node may include at least one of: identification information of the each sensing node, cell identification information and/or terminal device identification information corresponding to the each sensing node, identification information of another sensing node, or cell identification information and/or terminal device identification information corresponding to the another sensing node.

Optionally, the cell identification information and/or the terminal device identification information corresponding to the sensing node may include: cell identification information of the cell measured by the sensing node and/or identification information of the terminal device measured by the sensing node. Optionally, another sensing node may be one or more sensing nodes other than the each sensing node.

Optionally, in any one of the embodiments in the disclosure, the terminal device identification information may include at least one of: a SUbscription Permanent Identifier (SUPI), a SUbscription Concealed Identifier (SUCI), a Generic Public Subscription Identifier (GPSI), an application layer ID, a Globally Unique Temporary Identity (GUTI), an International Mobile Equipment Identity (IMEI), an International Mobile Subscriber Identity (IMSI), a Temporary Mobile Subscriber Identity (TMSI), a Packet-Temporary Mobile Subscriber Identity (P-TMSI), or a user mobile phone number, or the like.

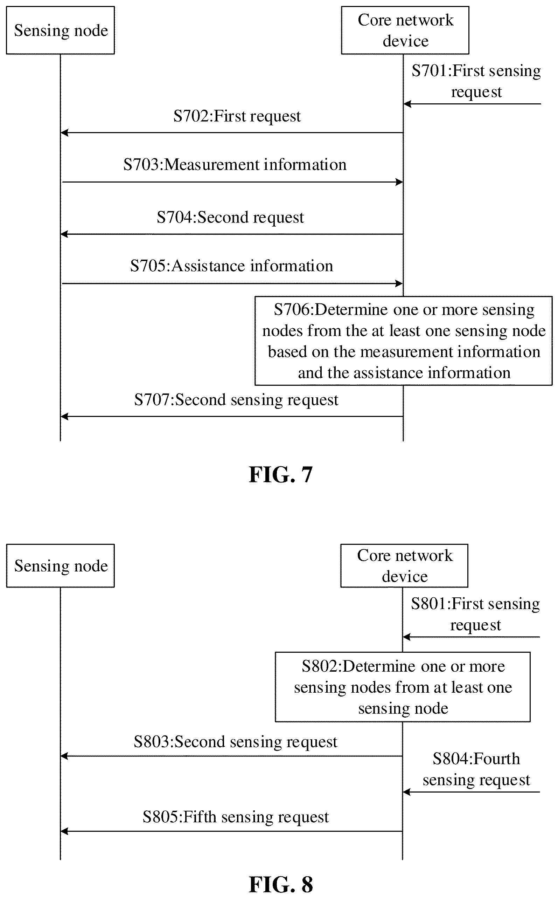

FIG. 7 is a flowchart of still another communication method provided in an embodiment of the disclosure. As illustrated in FIG. 7, the method includes the following operations S701 to S707.

At the operation S701, a core network device receives a first sensing request.

At the operation S702, the core network device transmits a first request to each of at least one sensing node.

At the operation S703, the core network device receives measurement information transmitted by each of the at least one sensing node.

At the operation S704, the core network device transmits a second request to each of the at least one sensing node.

At the operation S705, the core network device receives assistance information transmitted by each of the at least one sensing node.

At the operation S706, the core network device determines one or more sensing nodes from the at least one sensing node based on the measurement information and the assistance information.

At the operation S707, the core network device transmits a second sensing request to each of the one or more sensing nodes.

Optionally, the operations S702 and S704 may be combined. Optionally, the operations S703 and S705 may be combined. Optionally, in some embodiments, the operations S704 and S705 may not be executed.

In some embodiments, at the corresponding core network device side, the method further includes that: the core network device receives a fourth sensing request; and the core network device transmits a fifth sensing request to a first sensing node of the one or more sensing nodes. The fifth sensing request is determined based on the fourth sensing request and the second sensing request transmitted to the first sensing node.

In some embodiments, at the corresponding first sensing node side, the method further includes that: the first sensing node receives the fifth sensing request transmitted by the core network device. The fifth sensing request is determined by the core network device based on the received fourth sensing request and the second sensing request transmitted to the first sensing node.

Optionally, in a case of receiving the fifth sensing request, the first sensing node may perform a sensing task based on the fifth sensing request to obtain sensing information corresponding to the fifth sensing request, and report the sensing information corresponding to the fifth sensing request to the core network device.

Optionally, the core network device receives the fourth sensing request, which may include that: the core network device receives the fourth sensing request transmitted by a Consumer NF entity. Optionally, the core network device receives the fourth sensing request, which may include that: the core network device receives the fourth sensing request transmitted by an AF, an AMF, an access network device, a terminal device, or other core network devices listed above. Optionally, a device for transmitting the first sensing request and a device for transmitting the fourth sensing request may be the same device or different devices.

Optionally, the core network device receives the fourth sensing request, which may be an operation after the core network device transmits the second sensing request to each of the one or more sensing nodes.

Optionally, in other embodiments, the fifth sensing request may be referred to as a sensing update request.

Optionally, the first sensing node may include one sensing node, or the first sensing node may include multiple sensing nodes.

In some embodiments, at the corresponding core network device side, the method further includes that: the core network device determines the first sensing node from the one or more sensing nodes based on the fourth sensing request.

Optionally, the first sensing node may be a sensing node corresponding to the fourth sensing request among the one or more sensing nodes.

In some embodiments, the fourth sensing request includes at least one of: fourth information, a first sensing manner, a first sensing service type, or a third sensing service requirement. The fourth information includes at least one of: fourth area information, fourth location information, a fourth sensed object set, or a fourth sensed feature.

The fourth information at least partially overlaps with the second information included in the first sensing request.

Optionally, the fourth information may include the first information. For example, the fourth area information includes the first area information, and/or the fourth location information includes the first area information, and/or the fourth sensed object set includes the first sensed object set, and/or the fourth sensed feature includes the first sensed feature.

Optionally, the fourth information may include M types of information, where M is an integer greater than or equal to 1, and the first information may be one type of information among the M types of information. Optionally, the M types of information may correspond one-to-one to M types of sensing nodes.

Optionally, the fourth information may correspond to M types of sensing nodes, and different sensing nodes among the M types of sensing nodes may correspond to different information among the M types of information in the fourth information. Optionally, the first information may correspond to one type of sensing node. For example, the M types of sensing nodes include a first type of sensing node and a third type of sensing node. The first type of sensing node is configured to perform a sensing task determined based on the first area information, and the third type of sensing node is configured to perform a sensing task determined based on seventh area information. The first area information and the seventh area information are both included in the fourth area information in the fourth sensing request, and the first area information and the seventh area information do not overlap or partially overlap.

For example, the M types of sensing nodes are configured to perform sensing tasks determined based on the fourth information. Optionally, in the case of receiving the fourth sensing request, the core network device may divide the fourth information corresponding to the M types of sensing nodes into M types of information, where the M types of information correspond one-to-one to the M types of sensing nodes, so that the core network device transmits the respective one type of information to each of the M types of sensing nodes. Optionally, the at least one sensing node is included in one type of sensing node. For example, the at least one sensing node is included in the first type of sensing node. Optionally, the one or more sensing nodes are included in one type of sensing node. For example, the one or more sensing nodes are included in the first type of sensing node.

Optionally, the fourth information and the second information may be the same or partially the same.

Optionally, the third sensing service requirement and the first sensing service requirement may be the same or partially the same or completely different.

In some embodiments, the fifth sensing request includes at least one of: first information, a first sensing manner, a first sensing service type, or a fourth sensing service requirement. The first information includes at least one of: first area information, first location information, a first sensed object set, or a first sensed feature.

The fourth sensing service requirement is determined based on the first sensing service requirement included in the first sensing request or the second sensing request, and/or the third sensing service requirement included in the fourth sensing request.

Optionally, the fourth sensing service requirement may be determined based on the first sensing service requirement. For example, the fourth sensing service requirement may be the first sensing service requirement. Alternatively, the fourth sensing service requirement may be determined based on the third sensing service requirement. For example, the fourth sensing service requirement may be the third sensing service requirement.

Alternatively, the fourth sensing service requirement may be determined based on the first sensing service requirement and the third sensing service requirement.

In some embodiments, the fourth sensing service requirement includes a higher one between each requirement in the first sensing service requirement and a respective requirement in the third sensing service requirement.

Optionally, the fourth sensing service requirement includes at least one of: a longer one of a sensing duration in the first sensing service requirement and a sensing duration in the third sensing service requirement; a higher one of a sensing frequency in the first sensing service requirement and a sensing frequency in the third sensing service requirement; a higher one of the sensing frequency in the first sensing service requirement and the sensing frequency in the third sensing service requirement; a higher one of a reporting frequency in the first sensing service requirement and a reporting frequency in the third sensing service requirement; a higher one of precision information in the first sensing service requirement and precision information in the third sensing service requirement; a higher one of accuracy information in the first sensing service requirement and accuracy information in the third sensing service requirement; a lower one of false alarm rate information in the first sensing service requirement and false alarm rate information in the third sensing service requirement; a longer one of sensing time information in the first sensing service requirement and sensing time information in the third sensing service requirement; or a higher one of sensing dimension information in the first sensing service requirement and sensing dimension information in the third sensing service requirement.

FIG. 8 is a flowchart of a communication method provided in another embodiment of the disclosure. As illustrated in FIG. 8, the method includes the following operations S801 to S805.

At the operation S801, a core network device receives a first sensing request.

At the operation S802, the core network device determines one or more sensing nodes from at least one sensing node.

At the operation S803, the core network device transmits a second sensing request to each of the one or more sensing nodes.

At the operation S804, the core network device receives a fourth sensing request.

At the operation S805, the core network device transmits a fifth sensing request to a first sensing node among the one or more sensing nodes.

Optionally, the fifth sensing request is determined based on the fourth sensing request and the second sensing request transmitted to the first sensing node.

In some embodiments, the first sensing manner includes at least one of: a manner of obtaining sensing information by transmitting and receiving signals; a manner of obtaining sensing information through a transmitted signal; or a manner of obtaining sensing information through a received signal.

Optionally, in the manner of obtaining the sensing information by transmitting and receiving the signals, the sensing node may transmit a signal, receive a reflected signal/return signal, and determine the sensing information based on the received reflected signal/return signal.

Optionally, in the manner of obtaining the sensing information through the transmitted signal, the sensing node may transmit a signal, so that another device receives the signal, and determines the sensing information based on the received signal. The sensing node may receive the sensing information transmitted by the another device.

Optionally, in the manner of obtaining the sensing information through the received signal, the sensing node may receive a signal transmitted by another device, and determine the sensing information based on the signal transmitted by the another device.

In any one of the embodiments in the disclosure, the another device may include one or more terminal devices and/or one or more access network devices.

In some embodiments, the first sensing service type includes at least one of: location information of a sensed object, distribution information of the sensed object, contour information of the sensed object, size information of the sensed object, trajectory information of the sensed object, speed information of the sensed object, acceleration information of the sensed object, action information of the sensed object, gesture information of the sensed object, posture information of the sensed object, expression information of the sensed object, breathing information of the sensed object, heartbeat information of the sensed object, information of whether a specific object exists in an area, a map, driving, violation detection, object trajectory detection, emergency event detection, weather forecasting, environment imaging, or weather detection.

Optionally, the specific object may include an object having a specific feature. Optionally, the first sensing service type may indicate a specific object or a specific feature. Optionally, the first sensing service type includes the map, which may include that: the first sensing service type includes a map corresponding to an area. Optionally, the first sensing service type includes the driving, which may include that: the first sensing service type includes driving information corresponding to the area.

In some embodiments, any one or more of the first sensing service requirement, the second sensing service requirement, the third sensing service requirement, or the fourth sensing service requirement include at least one of: a sensing duration, a sensing frequency, a reporting frequency, precision information, accuracy information, false alarm rate information, sensing time information, or sensing dimension information.

Optionally, among the first sensing service requirement, the second sensing service requirement, the third sensing service requirement, and the fourth sensing service requirement, different sensing service requirements may differ in at least one of: a sensing duration, a sensing frequency, a reporting frequency, precision information, accuracy information, false alarm rate information, sensing time information, or sensing dimension information.

In the following, three embodiments are provided to explain the disclosure by taking an example that the core network device includes an SF.

In the first embodiment, the SF first issues a sensing task to multiple RAN/UE nodes, and then performs further selection based on feedback results. Optionally, after receiving a sensing request (corresponding to the first sensing request described above) and discovering multiple RAN/UE nodes (corresponding to the at least one sensing node described above), the SF first generates a one-time sensing sub-task based on the sensing request, and issues the sensing sub-task to all RAN/UE nodes that may execute the task, and then selects the UE/RAN based on reporting results for the sensing sub-task.

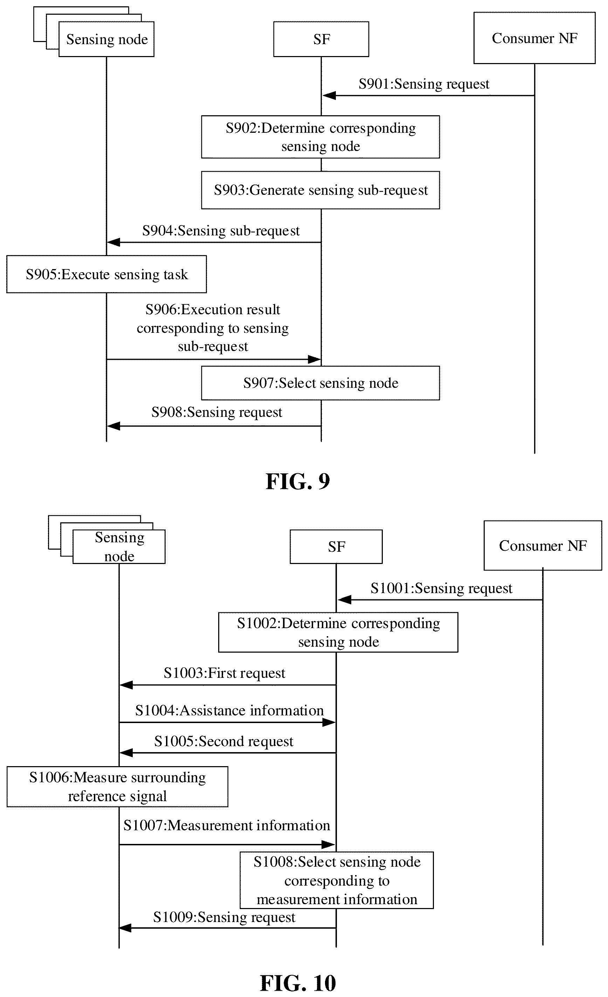

FIG. 9 is a flowchart of a communication method provided in yet another embodiment of the disclosure. As illustrated in FIG. 9, the method includes the following operations S901 to S908.

At the operation S901, a Consumer NF transmits a sensing request (corresponding to the first sensing request described above) to an SF.

Optionally, the sensing request may include at least one of: area information (corresponding to the second area information in the foregoing embodiments), a requested sensing manner (corresponding to the foregoing first sensing manner), a sensing service type (corresponding to the foregoing first sensing service type), or a sensing service requirement (corresponding to the foregoing first sensing service requirement).

Optionally, a format of the area information may be different from a format stored by the SF/a format supported by the SF. Optionally, the SF may locally convert the format of the area information, and then select corresponding sensing node(s) (a sensing node includes a RAN device or a terminal device) based on the format-converted area information (i.e., the area information in the format stored by the SF/in the format supported by the SF). Optionally, the SF may query another network element (for example, corresponding to the second network element in the foregoing embodiments) to obtain the format-converted area information, and then select the corresponding sensing node(s) based on the format-converted area information.

Optionally, the area information in the format stored by the SF/in the format supported by the SF includes at least one of: (1) reference point coordinates and a radius; (2) reference point coordinates, an area length and an area width; (3) one or more Zone IDs; or (4) a 3GPP area identifier. Optionally, the 3GPP area identifier may include a Cell ID and/or a Tracking Area ID.

At the operation S902, the SF determines corresponding sensing node(s) (corresponding to the foregoing at least one sensing node, and a sensing node includes a RAN device or a terminal device) based on the sensing request transmitted by the Consumer NF.

Optionally, the SF may discover the corresponding sensing node(s) by querying another network element (for example, the foregoing third network element), where the third network element may include one of: an AMF, a UDR, or a UDM. Optionally, the SF may discover the corresponding sensing node(s) by querying local information.

Optionally, the at least one discovered sensing node may perform a sensing service on the area information corresponding to the sensing request. For example, each of the at least one sensing node may individually cover the target area, or at least two of the at least one sensing node may collectively cover the target area.

At the operation S903, the SF generates a sensing sub-request (corresponding to the second sensing request in the foregoing embodiments) based on the sensing request.

Optionally, the sensing sub-request may be used for initially sensing the target area and selecting node(s) that finally execute the sensing task.

Optionally, the sensing sub-request may use the same sensing manner as the sensing request. The target area for sensing should be the area information included in the sensing request or a subset of the area information included in the sensing request, and a sensing duration and/or reporting frequency of the sensing sub-request should be lower than a sensing duration and/or reporting frequency of the sensing request. For example, the sensing request requires a measurement duration of 100 seconds and the reporting frequency of 1 time per second, while the sensing sub-request may require a single measurement and direct reporting of the result once, or a measurement duration of 10 seconds and reporting of the results twice, or the like.

At the operation S904, the SF transmits the sensing sub-request to all the discovered sensing nodes (corresponding to the foregoing at least one sensing node) that can execute the sensing task.

Optionally, in any one of the embodiments in the disclosure, communication between the SF and the sensing node may be direct communication, or communication between the SF and the sensing node may be communication through the AMF.

At the operation S905, the sensing node(s) execute the sensing task based on the sensing sub-request.

At the operation S906, the sensing node(s) reports execution result(s) corresponding to the sensing sub-request to the SF.

Optionally, the execution result may include sensing data information or first sensing information.

At the operation S907, the SF selects sensing node(s) based on the execution result(s) corresponding to the sensing sub-request.

Optionally, at the operation S907, the selected sensing node(s) may correspond to the one or more sensing nodes in the foregoing embodiments. Optionally, the execution result corresponding to the sensing sub-request may include at least one of: target location information, point cloud information, precision information, or channel quality information between the sensing node and the target area, or the like.

At the operation S908, the SF transmits a sensing request (corresponding to the foregoing second sensing request) to the selected sensing node(s).

In the related art, for the pre-area sensing, there may be many available sensing nodes (i.e., the foregoing at least one sensing node) that can be used for executing the sensing task. If the sensing task is issued to all the sensing nodes, it may cause waste of resources (some nodes with poor performance waste sensing resources without significantly improving the sensing results, or even cause poor sensing results). Thus, how to select a suitable sensing node is an urgent problem to be solved. The present solution decomposes the sensing task into the sub-task with similar functions (i.e. the foregoing sensing sub-request), obtains the sensing results of all the sensing nodes with lower overhead, and then selects the suitable sensing node to execute the sensing task based on the execution situation of the sub-task (i.e., the foregoing execution result corresponding to the sensing sub-request), thereby effectively reducing the system overhead.

In the second embodiment, the SF requests multiple RAN/UE nodes to report surrounding signal conditions, and performs a selection based on signal strength. Optionally, after querying and finding multiple RAN/UE nodes (corresponding to the foregoing at least one sensing node), the SF learns the sensing channel and signal strength conditions of each node by obtaining the assistance information and the reference signal reporting (corresponding to the foregoing measurement information) from the each node, and then selects the corresponding node to execute the sensing task.

FIG. 10 is a flowchart of a communication method provided in still another embodiment of the disclosure. As illustrated in FIG. 10, the method includes the following operations S1001 to S1009.

At the operation S1001, a Consumer NF transmits a sensing request (corresponding to the foregoing first sensing request) to an SF.

At the operation S1002, the SF determines corresponding sensing node(s) (corresponding to the foregoing at least one sensing node, and a sensing node includes a RAN device or a terminal device) based on the sensing request transmitted by the Consumer NF.

At the operation S1003, the SF transmits a first request to the sensing node(s) (corresponding to the foregoing at least one sensing node) found through the query.

Optionally, the first request may be used for requesting assistance information.

At the operation S1004, the sensing node(s) report the assistance information to the SF.

Optionally, the assistance information may include at least one of: cell identification information and/or terminal device identification information corresponding to a reference signal received by the sensing node, or cell identification information and/or terminal device identification information corresponding to a reference signal received by another sensing node.

Optionally, the assistance information may further include identification information of the sensing node. For example, the identification information of a sensing node may include identification information and/or address information of a RAN node, or the identification information of a sensing node may include identification information and/or address information of a terminal device. Optionally, the address information may include Media Access Control (MAC) address information and/or Internet Protocol (IP) address information, and/or the like.

At the operation S1005, the SF transmits a second request to the sensing node(s) (corresponding to the foregoing at least one sensing node) found through the query.

Optionally, the second request may be used for requesting measurement information.

Optionally, the measurement information may be measurement information for a surrounding reference signal. The measurement information may include at least one of: reference signal strength, reference signal quality, monitored channel information, SINR, distance information between the sensing node and a node transmitting the signal, or information of whether it is LOS propagation or NLOS propagation.

At the operation S1006, the sensing node(s) measures surrounding reference signals.

At the operation S1007, the sensing node(s) report measurement information to the SF.

Optionally, the measurement information carries ID information of the current node, as well as information, such as a Cell ID or a UE ID, corresponding to the measurement information.

Optionally, the operations S1003 and S1005 may be combined for transmitting in the same message, and/or the operations S1004 and S1007 may be combined for transmitting in the same message. Optionally, the operations S1003 and S1004 may be skipped, that is, the operations S1003 and S1004 may be excluded, and the SF may obtain the information by querying locally stored context information, or the SF may obtain the information by querying another network element (such as the core network element AMF/UDR/UDM).

At the operation S1008, the SF selects sensing node(s) (corresponding to the one or more sensing nodes in the foregoing embodiments) corresponding to the measurement information based on the measurement information and the assistance information reported by the sensing node(s).

Optionally, the SF may determine the sensing node ID(s) corresponding to the measurement information based on the measurement information and the assistance information reported by the sensing node(s), and then may select the node(s) corresponding to the measurement information by filtering the measurement information, to execute the sensing service.

At the operation S1009, the SF transmits a sensing request (corresponding to the foregoing second sensing request) to the selected sensing node(s) corresponding to the measurement information, to execute the sensing task.

The solution obtains the assistance information from the sensing node(s) and the reference signal information (corresponding to the foregoing measurement information) reported by the sensing node(s), and after obtaining the reference signal information, selects suitable sensing node(s) to execute the sensing task based on the reference signal information, thereby effectively reducing the system overhead. Compared with the first embodiment, the system overhead is further reduced (no sensing task needs to be performed, and only reference signal information, assistance information, and the like need to be collected). However, since the reference signal strength information and/or the like cannot directly reflect the execution situation of the sensing task, the selected node(s) may be not optimal compared with the first embodiment.

In the third embodiment, the SF preferentially selects the RAN/UE node having the similar sensing tasks. Optionally, when the SF receives a sensing task A (corresponding to the foregoing first sensing request), the SF first selects sensing nodes, and then stores the corresponding context information. When the SF receives a sensing task B (corresponding to the foregoing fourth sensing request), the SF preferentially selects a node based on the stored context information of the sensing task A, and updates the sensing task.

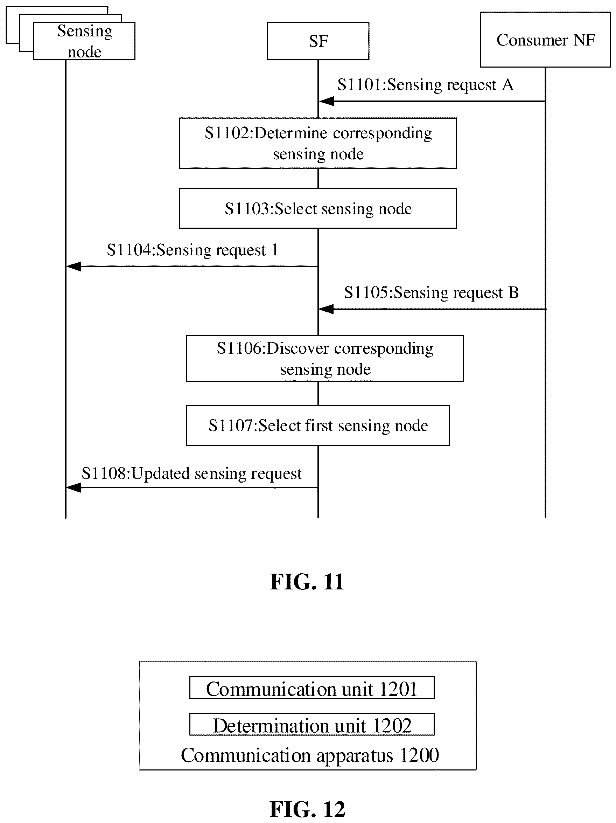

FIG. 11 is a flowchart of another communication method provided in another embodiment of the disclosure. As illustrated in FIG. 11, the method includes the following operations S1101 to S1108.

At the operation S1101, a Consumer NF transmits a sensing request A (corresponding to the foregoing first sensing request) to an SF.

At the operation S1102, the SF determines corresponding sensing node(s) (corresponding to the foregoing at least one sensing node, and a sensing node includes a RAN device or a terminal device) based on the sensing request A transmitted by the Consumer NF.

At the operation S1103, the SF selects sensing node(s) (corresponding to the foregoing one or more sensing nodes).

Optionally, the SF may select the sensing node(s) through the first embodiment or the second embodiment or other methods.

At the operation S1104, the SF transmits a sensing request 1 (corresponding to the foregoing second sensing request) to the selected sensing node(s).

Optionally, the sensing request 1 corresponds to the sensing request A, and they may include the same sensing task. Optionally, there may be multiple sensing requests 1 for transmitting to different sensing nodes. Optionally, all the sensing requests 1 transmitted to different sensing nodes correspond to the task A, but the specific parameters may be different. For example, the requested areas are different, the sensing node 1 covers the Cell ID1 and the sensing node 2 covers the Cell ID2.

At the operation S1105, the Consumer NF transmits a sensing request B (corresponding to the foregoing fourth sensing request) to the SF.

Optionally, the sensing request B may include at least one of: area information (corresponding to the fourth area information in the foregoing embodiments), a requested sensing manner (corresponding to the foregoing first sensing manner), a sensing service type (corresponding to the foregoing first sensing service type), or a sensing service requirement (corresponding to the foregoing third sensing service requirement).

Optionally, the Consumer NF in the operation S1105 may be the same as or different from the Consumer NF in the operation S1101. Optionally, an area in the sensing request B and an area in the sensing request A partially or completely overlap, and the sensing manners and the sensing service types are the same or similar.

At the operation S1106, the SF discovers corresponding sensing node(s) (corresponding to the foregoing one or more nodes) based on the area information in the sensing request B.

At the operation S1107, the SF selects a first sensing node.

Optionally, the SF may preferentially select node(s) that executes the similar sensing task in the same area and take the selected node(s) as the first sensing node.

At the operation S1108, the SF transmits an updated sensing request (corresponding to the foregoing fifth sensing request) to the node(s) (i.e., the first sensing node) currently serving the sensing request A.

Optionally, the updated sensing request may complete the tasks of the sensing request A and the sensing request B. For example, if the sensing request A requires a sensing precision of 0.2m and a reporting frequency of 1time per second, and the sensing request B requires a sensing precision of 0.1m and a reporting frequency of 2 times per second, then the transmitted sensing request has a precision of 0.1m and a reporting frequency of 1time per second. This request may further include requirements in other dimensions, such as the trusted probability (corresponding to the foregoing accuracy information), the false alarm rate. The SF may select the strictest requirements for updating the configuration.

In the embodiment of the disclosure, by querying the existing sensing task contexts and reusing the sensing node(s) to execute the sensing tasks, the sensing resources are further saved.

The disclosure provides an embodiment, in which after receiving a sensing request, the SF generates a sensing sub-task based on the sensing request, and transmits the sensing sub-task to the discovered RAN/UE nodes. The SF selects the final UE/RAN(s) to execute the sensing task based on the execution situation of the sensing sub-request.

The disclosure provides an embodiment, in which the SF selects RAN/UE node(s) to execute the sensing task based on reference signal measurement information and assistance information reported by the RAN/UE nodes. The SF requests the reference signal measurement information from the discovered RAN/UE. The SF queries and obtain the assistance information from the discovered RAN/UE and its surrounding nodes.

The disclosure provides an embodiment, in which after receiving a sensing request, the SF preferentially selects node(s) that can be reused by querying the current existing sensing task contexts, and updates the sensing request for the node(s), so that the node(s) can complete multiple sensing tasks.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solutions of the present disclosure, and these simple modifications all fall within the scope of protection of the present disclosure. For example, various specific technical features described in the above specific embodiments may be combined in any suitable manner without conflict. Various possible combinations are not further described in the present disclosure to avoid unnecessary repetition. For another example, various different implementations of the present disclosure can also be combined arbitrarily, which should also be considered as the content disclosed by the present disclosure as long as they do not violate the conception of the present disclosure. For another example, various embodiments described in the present disclosure and/or the technical features in various embodiments can be arbitrarily combined with the related technologies without conflict, and the technical solutions obtained after the combination should also fall within the scope of protection of the present disclosure.

It should also be understood that in the various method embodiments of the present disclosure, the size of the serial numbers of the above-mentioned various processes do not indicate a sequence of execution. The sequence of execution of the processes should be determined by their functions and inherent logics, and should not constitute a limitation on the implementation process of the embodiments of the present disclosure. Further, in embodiments of the present disclosure, the terms "downlink", "uplink" and "sidelink" are used to indicate transmission directions of signals or data. The term "downlink" is used to denote that the transmission direction of the signals or the data is a first direction from a station to user equipment in a cell. The term "uplink" is used to denote that the transmission direction of the signals or the data is a second direction from the user equipment in the cell to the station. The term "sidelink" is used to denote that the transmission direction of the signals or the data is a third direction from first user equipment to second user equipment. For example, "downlink signal" means that the transmission direction of the signal is the first direction. In addition, in the embodiments of the present disclosure, the term "and/or" refers to only an association relationship for describing associated objects and represents that three relationships may exist. Specifically, A and/or B may represent three cases: i.e., only A exists, both A and B exist, and only B exists. Furthermore, character "/" in the disclosure usually represents that previous and next associated objects form an "or" relationship.

FIG. 12 is a structural diagram of a communication apparatus provided in an embodiment of the disclosure, which is applied to a terminal device. As illustrated in FIG. 12, the communication apparatus 1200 includes a communication unit 1201 and a determination unit 1202.

The communication unit 1201 is configured to receive a first sensing request.

The determination unit 1202 is configured to determine one or more sensing nodes from at least one sensing node.

The communication unit 1201 is further configured to transmit a second sensing request to each of the one or more sensing nodes.

Optionally, the sensing node is configured to perform a sensing task determined based on first information. The first information includes at least one of: first area information, first location information, a first sensed object set, or a first sensed feature.

Optionally, the second sensing request includes at least one of: first information, a first sensing manner, a first sensing service type, or a first sensing service requirement. The first information includes at least one of: first area information, first location information, a first sensed object set, or a first sensed feature.

Optionally, the first sensing request includes at least one of: second information, a first sensing manner, a first sensing service type, or a first sensing service requirement. The second information includes at least one of: second area information, second location information, a second sensed object set, or a second sensed feature.

Optionally, the communication unit 1201 is further configured to transmit a third sensing request to each of the at least one sensing node.

Optionally, the third sensing request includes at least one of: third information, a first sensing manner, a first sensing service type, or a second sensing service requirement.

The third information includes at least one of: third area information, third location information, a third sensed object set, or a third sensed feature. The third information is contained in first information included in the second sensing request.

The second sensing service requirement is lower than or equal to a first sensing service requirement included in the second sensing request.

Optionally, the third sensing request is determined by the core network device based on the received first sensing request.

Optionally, the communication unit 1201 is further configured to: receive first sensing information transmitted by each of the at least one sensing node.

The first sensing information is used for determining the one or more sensing nodes from the at least one sensing node.

Optionally, the first sensing information includes at least one of: location information, point cloud information, signal measurement information, LOS indication information, or NLOS indication information.

Optionally, the communication unit 1201 is further configured to: transmit a first request to each of the at least one sensing node. The first request is used for requesting measurement information.

Optionally, the communication unit 1201 is further configured to: receive measurement information transmitted by each of the at least one sensing node.

The measurement information, or the measurement information and assistance information, is used for determining the one or more sensing nodes from the at least one sensing node.

Optionally, the communication unit 1201 is further configured to: transmit a second request to each of the at least one sensing node. The second request is used for requesting assistance information.

Optionally, the communication unit 1201 is further configured to: receive the assistance information transmitted by each of the at least one sensing node.

Optionally, the determination unit 1202 is further configured to: locally obtain the assistance information.

Optionally, the determination unit 1202 is further configured to: obtain the assistance information from a first network element.

Optionally, the measurement information includes at least one of: a measurement result obtained by measuring a signal in a cell and/or a signal transmitted by a terminal device, information determined based on the measurement result obtained by measuring the signal in the cell and/or the signal transmitted by the terminal device, or identification information of the measured cell and/or terminal device.

Optionally, the assistance information includes at least one of: identification information of each of the at least one sensing node, cell identification information and/or terminal device identification information corresponding to each of the at least one sensing node, identification information of another sensing node, or cell identification information and/or terminal device identification information corresponding to the another sensing node.

Optionally, the communication unit 1201 is further configured to: receive a fourth sensing request; and transmit a fifth sensing request to a first sensing node of the one or more sensing nodes. The fifth sensing request is determined based on the fourth sensing request and the second sensing request transmitted to the first sensing node.

Optionally, the determination unit 1202 is further configured to determine the first sensing node from the one or more sensing nodes based on the fourth sensing request.

Optionally, the fourth sensing request includes at least one of: fourth information, a first sensing manner, a first sensing service type, or a third sensing service requirement. The fourth information includes at least one of: fourth area information, fourth location information, a fourth sensed object set, or a fourth sensed feature.

The fourth information at least partially overlaps with second information included in the first sensing request.

Optionally, the fifth sensing request includes at least one of: first information, a first sensing manner, a first sensing service type, a fourth sensing service requirement. The first information includes at least one of: first area information, first location information, a first sensed object set, or a first sensed feature.

The fourth sensing service requirement is determined based on a first sensing service requirement included in the first sensing request or the second sensing request, and/or a third sensing service requirement included in the fourth sensing request.

Optionally, the fourth sensing service requirement includes a higher one between each requirement in the first sensing service requirement and a respective requirement in the third sensing service requirement.

Optionally, the first sensing manner includes at least one of: a manner of obtaining sensing information by transmitting and receiving signals; a manner of obtaining sensing information through a transmitted signal; or a manner of obtaining sensing information through a received signal.

Optionally, the first sensing service type includes at least one of: location information of a sensed object, distribution information of the sensed object, contour information of the sensed object, size information of the sensed object, trajectory information of the sensed object, speed information of the sensed object, acceleration information of the sensed object, action information of the sensed object, gesture information of the sensed object, posture information of the sensed object, expression information of the sensed object, breathing information of the sensed object, heartbeat information of the sensed object, information of whether a specific object exists in an area, a map, driving, violation detection, object trajectory detection, emergency event detection, weather forecasting, environment imaging, or weather detection.

Optionally, any one or more of the first sensing service requirement, a second sensing service requirement, a third sensing service requirement, or a fourth sensing service requirement include at least one of: a sensing duration, a sensing frequency, a reporting frequency, precision information, accuracy information, false alarm rate information, sensing time information, or sensing dimension information.

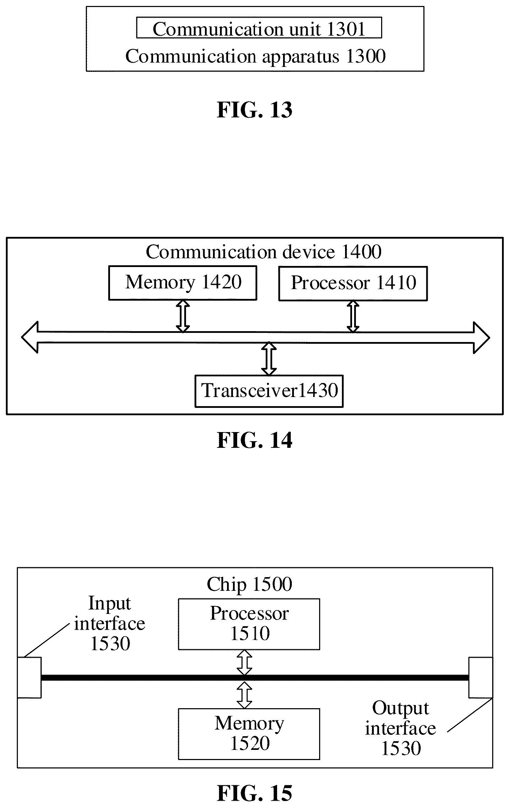

FIG. 13 is a structural diagram of another communication apparatus provided in an embodiment of the disclosure, which is applied to a terminal device. As illustrated in FIG. 13, the communication device 1300 includes a communication unit 1301.

The communication unit 1301 is configured to receive a second sensing request transmitted by a core network device. The first sensing node is determined by the core network device from at least one sensing node.

Optionally, the communication device 1300 further includes an execution unit 1302, configured to perform a sensing task corresponding to the second sensing request.

Optionally, the second sensing request includes at least one of: first information, a first sensing manner, a first sensing service type, or a first sensing service requirement. The first information includes at least one of: first area information, first location information, a first sensed object set, or a first sensed feature.

Optionally, the communication unit 1301 is further configured to receive a third sensing request transmitted by the core network device.

Optionally, the third sensing request includes at least one of: third information, a first sensing manner, a first sensing service type, or a second sensing service requirement.

The third information includes at least one of: third area information, third location information, a third sensed object set, or a third sensed feature. The third information is contained in first information included in the second sensing request.

The second sensing service requirement is lower than or equal to a first sensing service requirement included in the second sensing request.

Optionally, the communication unit 1301 is further configured to transmit first sensing information to the core network device.

The first sensing information is used for determining one or more sensing nodes from the at least one sensing node.

Optionally, the first sensing information includes at least one of: location information, point cloud information, signal measurement information, LOS indication information, or NLOS indication information.

Optionally, the communication unit 1301 is further configured to receive a first request transmitted by the core network device. The first request is used for requesting measurement information.

Optionally, the communication unit 1301 is further configured to transmit measurement information to the core network device.

The measurement information, or the measurement information and assistance information, is used for determining one or more sensing nodes from the at least one sensing node.

Optionally, the communication unit 1301 is further configured to receive a second request transmitted by the core network device. The second request is used for requesting assistance information.

Optionally, the measurement information includes at least one of: a measurement result obtained by measuring a signal in a cell and/or a signal transmitted by a terminal device, information determined based on the measurement result obtained by measuring the signal in the cell and/or the signal transmitted by the terminal device, or identification information of the measured cell and/or terminal device.

Optionally, the assistance information includes at least one of: identification information of each of the at least one sensing node, cell identification information and/or terminal device identification information corresponding to each of the at least one sensing node, identification information of another sensing node, or cell identification information and/or terminal device identification information corresponding to the another sensing node.

Optionally, the communication unit 1301 is further configured to receive a fifth sensing request transmitted by the core network device. The fifth sensing request is determined by the core network device based on received fourth sensing request and the second sensing request transmitted to the first sensing node.

Optionally, the fifth sensing request includes at least one of: first information, a first sensing manner, a first sensing service type, a fourth sensing service requirement. The first information includes at least one of: first area information, first location information, a first sensed object set, or a first sensed feature.

The fourth sensing service requirement is determined based on a first sensing service requirement included in the second sensing request, and/or a third sensing service requirement included in the fourth sensing request.

Optionally, the fourth sensing service requirement includes a higher one between each requirement in the first sensing service requirement and a respective requirement in the third sensing service requirement.

Optionally, the first sensing manner includes at least one of: a manner of obtaining sensing information by transmitting and receiving signals; a manner of obtaining sensing information through a transmitted signal; or a manner of obtaining sensing information through a received signal.

Optionally, the first sensing service type includes at least one of: location information of a sensed object, distribution information of the sensed object, contour information of the sensed object, size information of the sensed object, trajectory information of the sensed object, speed information of the sensed object, acceleration information of the sensed object, action information of the sensed object, gesture information of the sensed object, posture information of the sensed object, expression information of the sensed object, breathing information of the sensed object, heartbeat information of the sensed object, information of whether a specific object exists in an area, a map, driving, violation detection, object trajectory detection, emergency event detection, weather forecasting, environment imaging, or weather detection.

Optionally, any one or more of the first sensing service requirement, a second sensing service requirement, a third sensing service requirement, or a fourth sensing service requirement includes at least one of: a sensing duration, a sensing frequency, a reporting frequency, precision information, accuracy information, false alarm rate information, sensing time information, or sensing dimension information.

Those skilled in the art would appreciate that the relevant description of the above communication apparatuses according to the embodiments of the present disclosure may be understood with reference to the relevant description of the communication methods according to the embodiments of the present disclosure.

FIG. 14 is a structural diagram of a communication device provided in an embodiment of the disclosure. The communication device 1400 may include one of: a core network device or a first sensing node. The communication device 1400 illustrated in FIG. 14 may include a processor 1410 and a memory 1420. The memory 1420 stores a computer program. The processor 1410 is configured to call the computer program stored in the memory 1420 and run the computer program to cause the communication device 1400 to perform the method in any one of the foregoing embodiments. Optionally, the communication device may be the core network device, and the processor 1410 is configured to call the computer program stored in the memory 1420 and run the computer program to cause the core network device to perform the method in any one of the foregoing embodiments. Optionally, the communication device may be the first sensing node, and the processor 1410 is configured to call the computer program stored in the memory 1420 and run the computer program to cause the first sensing node to perform the method in any one of the foregoing embodiments.

Optionally, the memory 1420 may be a separate device independent of the processor 1410 or may be integrated in the processor 1410.

In some embodiments, as illustrated in FIG. 14, the communication device 1400 may further include a transceiver 1430, and the processor 1410 may control the transceiver 1430 to communicate with other devices. Specifically, the processor 1410 may control the transceiver 1430 to transmit information or data to other devices, or receive information or data from other devices.

The transceiver 1430 may include a transmitter and a receiver. The transceiver 1430 may further include one or more antennas.

In some embodiments, the communication device 1400 may specifically be the core network device or the first sensing node in the embodiments of the disclosure, and the communication device 1400 may perform corresponding processes performed by the core network device or the first sensing node in various methods of the embodiments of the disclosure, which are not elaborated here for the sake of brevity.

An embodiment of the disclosure also provides a computer storage medium having stored thereon one or more programs that, when executed by one or more processors, cause the one or more processors to perform the communication method in any one of the embodiments of the disclosure.

In some embodiments, the computer-readable storage medium may be applied to the core network device or the first sensing node in the embodiments of the disclosure, and the computer program causes the computer to execute corresponding processes implemented by the core network device or the first sensing node in various methods of the embodiments of the disclosure, which are not elaborated here for the sake of brevity.

FIG. 15 is a structural diagram of a chip according to an embodiment of the disclosure. The chip 1500 illustrated in FIG. 15 includes a processor 1510, configured to invoke and run a computer program from a memory to perform the method in any one of the embodiments in the disclosure.

In some embodiments, as illustrated in FIG. 15, the chip 1500 may further include a memory 1520, and the processor 1510 may invoke and run a computer program from the memory 1520 to implement the methods in the embodiments of the present disclosure.

The memory 1520 may be a separate device independent of the processor 1510, or may be integrated in the processor 1510.

In some embodiments, the chip 1500 may further include an input interface 1530. The processor 1510 may control the input interface 1530 to communicate with other devices or chips. Specifically, the processor 1510 may control the input interface 1530 to acquire information or data transmitted by other devices or chips.

In some embodiments, the chip 1500 may further include an output interface 1540. The processor 1510 may control the output interface 1540 to communicate with other devices or chips. Specifically, the processor 1510 may control the output interface 1540 to output information or data to other devices or chips.

In some embodiments, the chip may be applied to the core network device or the first sensing node in the embodiments of the disclosure, and the chip may perform corresponding processes performed by the core network device or the first sensing node in various methods of the embodiments of the disclosure, which are not elaborated here for the sake of brevity.

It should be understood that the chip mentioned in the embodiments of the present disclosure may also be referred to as a system-level chip, a system chip, a chip system, or a system-on-chip chip, or the like.

An embodiment of the disclosure further provides a computer program product including a computer storage medium. The computer storage medium stores a computer program including instructions executable by at least one processor that, when executed by the at least one processor, perform the communication method in any one of the embodiments of the disclosure.

In some embodiments, the computer program product may be applied to the core network device or the first sensing node in the embodiments of the disclosure, and the computer program instructions cause the computer to execute corresponding processes performed by the core network device or the first sensing node in various methods of the embodiments of the present disclosure, which are not elaborated here for the sake of brevity.

Optionally, the computer program product in the embodiment of the disclosure may also be referred to as a software product in other embodiments.

An embodiment of the disclosure further provides a computer program that causes a computer to execute the communication method in any one of the embodiments of the disclosure.

In some embodiments, the computer program may be applied to the core network device or the first sensing node in the embodiments of the disclosure, and the computer program causes a computer to execute corresponding processes performed by the core network device or the first sensing node in various methods of the embodiments of the present disclosure when the computer program is run on the computer, which are not elaborated here for the sake of brevity.

The processor, the communication apparatus or the chip in the embodiments of the disclosure may be an integrated circuit chip having signal processing capability. In implementation, the various operations of the above method embodiments may be accomplished by integrated logic circuit of hardware or instructions in the form of software in a processor. The processor, the communication apparatus, or the chip described above may include an integration of any one or more of: a general purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), an embedded neural-network processing unit (NPU), a controller, a microcontroller, a microprocessor, a programmable logic device, a discrete gate or transistor logic device, or a discrete hardware component. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads information in the memory and completes the operations of the above methods in combination with its hardware.

It is understood that the memory or the computer storage medium in embodiments of the present disclosure may be volatile memory or non-volatile memory or may include both volatile and non-volatile memory. The non-volatile memory may be an ROM, a PROM, an Erasable PROM (EPROM), an EEPROM, or a flash memory. The volatile memory may be an RAM which serves as an external cache. By way of illustration but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memories.

It should be understood that the memory or the computer storage medium described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use a different method for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided in the present disclosure, it should be understood that the disclosed systems, devices and methods may be implemented in other ways. For example, the above-described embodiments of the devices are only schematic, for example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interfaces, devices or units, and may be electrical, mechanical or other forms.

The units illustrated as separate components may or may not be physically separate, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

In any one of the embodiments of the disclosure, a time interval, a time period, within a time range, within a time duration, or within a time window, or the like may include both the endpoint times, or may include part of the endpoint times (for example, including the left endpoint time but not including the right endpoint time, or including the right endpoint time but not including the left endpoint time), or may not include the endpoint times.

The functions may be stored in a computer readable storage medium if implemented in the form of software functional units and sold or used as stand-alone products. In view of this understanding, the technical solutions of the present disclosure in essence, or the part that contributes to the related technologies, or the part of the technical solutions can be embodied in the form of a software product. The computer software product is stored in a storage medium and includes instructions that enables a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

## Claims

1. A communication method, comprising:
receiving, by a core network device, a first sensing request;
determining, by the core network device, one or more sensing nodes from at least one sensing node; and
transmitting, by the core network device, a second sensing request to each of the one or more sensing nodes.

2. The method of claim 1, wherein the sensing node is configured to perform a sensing task determined based on first information, the first information comprising at least one of: first area information, first location information, a first sensed object set, or a first sensed feature.

3. The method of claim 1 or 2, wherein the second sensing request comprises at least one of: first information, a first sensing manner, a first sensing service type, or a first sensing service requirement; wherein the first information comprises at least one of: first area information, first location information, a first sensed object set, or a first sensed feature.

4. The method of any one of claims 1 to 3, wherein the first sensing request comprises at least one of: second information, a first sensing manner, a first sensing service type, or a first sensing service requirement; wherein the second information comprises at least one of: second area information, second location information, a second sensed object set, or a second sensed feature.

5. The method of any one of claims 1 to 4, further comprising:
transmitting, by the core network device, a third sensing request to each of the at least one sensing node.

6. The method of claim 5, wherein the third sensing request comprises at least one of: third information, a first sensing manner, a first sensing service type, or a second sensing service requirement;
wherein the third information comprises at least one of: third area information, third location information, a third sensed object set, or a third sensed feature; and the third information is contained in first information comprised in the second sensing request; and
the second sensing service requirement is lower than or equal to a first sensing service requirement comprised in the second sensing request.

7. The method of claim 5 or 6, wherein the third sensing request is determined by the core network device based on the received first sensing request.

8. The method of any one of claims 1 to 7, further comprising:
receiving, by the core network device, first sensing information transmitted by each of the at least one sensing node, the first sensing information being used for determining the one or more sensing nodes from the at least one sensing node.

9. The method of claim 8, wherein the first sensing information comprises at least one of: location information, point cloud information, signal measurement information, Line Of Sight (LOS) indication information, or Non Line Of Sight (NLOS) indication information.

10. The method of any one of claims 1 to 4, further comprising:
transmitting, by the core network device, a first request to each of the at least one sensing node, the first request being used for requesting measurement information.

11. The method of any one of claims 1 to 4, and 10, further comprising:
receiving, by the core network device, measurement information transmitted by each of the at least one sensing node,
wherein the measurement information, or the measurement information and assistance information, is used for determining the one or more sensing nodes from the at least one sensing node.

12. The method of claim 10 or 11, further comprising:
transmitting, by the core network device, a second request to each of the at least one sensing node, the second request being used for requesting assistance information.

13. The method of claim 11 or 12, further comprising at least one of:
receiving, by the core network device, the assistance information transmitted by each of the at least one sensing node;
locally obtaining, by the core network device, the assistance information; or
obtaining, by the core network device, the assistance information from a first network element.

14. The method of any one of claims 10 to 13, wherein the measurement information comprises at least one of: a measurement result obtained by measuring a signal in a cell and/or a signal transmitted by a terminal device, information determined based on the measurement result obtained by measuring the signal in the cell and/or the signal transmitted by the terminal device, or identification information of the measured cell and/or terminal device.

15. The method of any one of claims 11 to 13, wherein the assistance information comprises at least one of: identification information of each of the at least one sensing node, cell identification information and/or terminal device identification information corresponding to each of the at least one sensing node, identification information of another sensing node, or cell identification information and/or terminal device identification information corresponding to the another sensing node.

16. The method of any one of claims 1 to 15, further comprising:
receiving, by the core network device, a fourth sensing request; and
transmitting, by the core network device, a fifth sensing request to a first sensing node of the one or more sensing nodes, the fifth sensing request being determined based on the fourth sensing request and the second sensing request transmitted to the first sensing node.

17. The method of claim 16, further comprising:
determining, by the core network device, the first sensing node from the one or more sensing nodes based on the fourth sensing request.

18. The method of claim 16 or 17, wherein the fourth sensing request comprises at least one of: fourth information, a first sensing manner, a first sensing service type, or a third sensing service requirement;
wherein the fourth information comprises at least one of: fourth area information, fourth location information, a fourth sensed object set, or a fourth sensed feature; and
the fourth information at least partially overlaps with second information comprised in the first sensing request.

19. The method of any one of claims 16 to 18, wherein the fifth sensing request comprises at least one of: first information, a first sensing manner, a first sensing service type, a fourth sensing service requirement;
wherein the first information comprises at least one of: first area information, first location information, a first sensed object set, or a first sensed feature; and
the fourth sensing service requirement is determined based on a first sensing service requirement comprised in the first sensing request or the second sensing request, and/or a third sensing service requirement comprised in the fourth sensing request.

20. The method of claim 19, wherein the fourth sensing service requirement comprises a higher one between each requirement in the first sensing service requirement and a respective requirement in the third sensing service requirement.

21. The method of any one of claims 3, 4, 6, 18 to 20, wherein the first sensing manner comprises at least one of:
a manner of obtaining sensing information by transmitting and receiving signals;
a manner of obtaining sensing information through a transmitted signal; or
a manner of obtaining sensing information through a received signal.

22. The method of any one of claims 3, 4, 6, 18 to 20, wherein the first sensing service type comprises at least one of: location information of a sensed object, distribution information of the sensed object, contour information of the sensed object, size information of the sensed object, trajectory information of the sensed object, speed information of the sensed object, acceleration information of the sensed object, action information of the sensed object, gesture information of the sensed object, posture information of the sensed object, expression information of the sensed object, breathing information of the sensed object, heartbeat information of the sensed object, information of whether a specific object exists in an area, a map, driving, violation detection, object trajectory detection, emergency event detection, weather forecasting, environment imaging, or weather detection.

23. The method of any one of claims 3, 4, 6, 18 to 20, wherein any one or more of the first sensing service requirement, a second sensing service requirement, a third sensing service requirement, or a fourth sensing service requirement comprise at least one of:
a sensing duration, a sensing frequency, a reporting frequency, precision information, accuracy information, false alarm rate information, sensing time information, or sensing dimension information.

24. A communication method, comprising:
receiving, by a first sensing node, a second sensing request transmitted by a core network device, the first sensing node being determined by the core network device from at least one sensing node.

25. The method of claim 24, wherein the second sensing request comprises at least one of: first information, a first sensing manner, a first sensing service type, or a first sensing service requirement; wherein the first information comprises at least one of: first area information, first location information, a first sensed object set, or a first sensed feature.

26. The method of claim 24 or 25, further comprising:
receiving, by the first sensing node, a third sensing request transmitted by the core network device.

27. The method of claim 26, wherein the third sensing request comprises at least one of: third information, a first sensing manner, a first sensing service type, or a second sensing service requirement;
wherein the third information comprises at least one of: third area information, third location information, a third sensed object set, or a third sensed feature; and the third information is contained in first information comprised in the second sensing request; and
the second sensing service requirement is lower than or equal to a first sensing service requirement comprised in the second sensing request.

28. The method of any one of claims 24 to 27, further comprising:
transmitting, by the first sensing node, first sensing information to the core network device, the first sensing information being used for determining one or more sensing nodes from the at least one sensing node.

29. The method of claim 28, wherein the first sensing information comprises at least one of: location information, point cloud information, signal measurement information, Line Of Sight (LOS) indication information, or Non Line Of Sight (NLOS) indication information.

30. The method of claim 24 or 25, further comprising:
receiving, by the first sensing node, a first request transmitted by the core network device, the first request being used for requesting measurement information.

31. The method of claim 24, 25, or 30, further comprising:
transmitting, by the first sensing node, measurement information to the core network device,
wherein the measurement information, or the measurement information and assistance information, is used for determining one or more sensing nodes from the at least one sensing node.

32. The method of claim 30 or 31, further comprising:
receiving, by the first sensing node, a second request transmitted by the core network device, the second request being used for requesting assistance information.

33. The method of any one of claims 30 to 32, wherein the measurement information comprises at least one of: a measurement result obtained by measuring a signal in a cell and/or a signal transmitted by a terminal device, information determined based on the measurement result obtained by measuring the signal in the cell and/or the signal transmitted by the terminal device, or identification information of the measured cell and/or terminal device.

34. The method of claim 31 or 32, wherein the assistance information comprises at least one of: identification information of each of the at least one sensing node, cell identification information and/or terminal device identification information corresponding to each of the at least one sensing node, identification information of another sensing node, or cell identification information and/or terminal device identification information corresponding to the another sensing node.

35. The method of any one of claims 24 to 34, further comprising:
receiving, by the first sensing node, a fifth sensing request transmitted by the core network device, the fifth sensing request being determined by the core network device based on received fourth sensing request and the second sensing request transmitted to the first sensing node.

36. The method of claim 35, wherein the fifth sensing request comprises at least one of: first information, a first sensing manner, a first sensing service type, or a fourth sensing service requirement;
wherein the first information comprises at least one of: first area information, first location information, a first sensed object set, or a first sensed feature; and
the fourth sensing service requirement is determined based on a first sensing service requirement comprised in the second sensing request, and/or a third sensing service requirement comprised in the fourth sensing request.

37. The method of claim 36, wherein the fourth sensing service requirement comprises a higher one between each requirement in the first sensing service requirement and a respective requirement in the third sensing service requirement.

38. The method of any one of claims 25, 27, 36, and 37, wherein the first sensing manner comprises at least one of:
a manner of obtaining sensing information by transmitting and receiving signals;
a manner of obtaining sensing information through a transmitted signal; or
a manner of obtaining sensing information through a received signal.

39. The method according to any one of claims 25, 27, 36, and 37, wherein the first sensing service type comprises at least one of: location information of a sensed object, distribution information of the sensed object, contour information of the sensed object, size information of the sensed object, trajectory information of the sensed object, speed information of the sensed object, acceleration information of the sensed object, action information of the sensed object, gesture information of the sensed object, posture information of the sensed object, expression information of the sensed object, breathing information of the sensed object, heartbeat information of the sensed object, information of whether a specific object exists in an area, a map, driving, violation detection, object trajectory detection, emergency event detection, weather forecasting, environment imaging, or weather detection.

40. The method according to any one of claims 25, 27, 36, and 37, wherein any one or more of the first sensing service requirement, a second sensing service requirement, a third sensing service requirement, or a fourth sensing service requirement comprises at least one of:
a sensing duration, a sensing frequency, a reporting frequency, precision information, accuracy information, false alarm rate information, sensing time information, or sensing dimension information.

41. A communication apparatus, comprising:
a communication unit, configured to receive a first sensing request; and
a determination unit, configured to determine one or more sensing nodes from at least one sensing node;
wherein the communication unit is further configured to transmit a second sensing request to each of the one or more sensing nodes.

42. A communication apparatus, comprising:
a communication unit, configured to receive a second sensing request transmitted by a core network device, the first sensing node being determined by the core network device from at least one sensing node.

43. A communication device, comprise: a processor and a memory, wherein
the memory is configured to store a computer program; and
the processor is configured to call the computer program stored in the memory and run the computer program to cause the communication device to perform the method of any one of claims 1 to 23 or the method of any one of claims 24 to 40.

44. A computer storage medium storing one or more programs that, when executed by one or more processors, perform the method of any one of claims 1 to 23 or the method of any one of claims 24 to 40.

45. A chip, comprising a processor, configured to call a computer program from a memory and run the computer program to perform the method of any one of claims 1 to 23 or the method of any one of claims 24 to 40.

46. A computer program product, comprising a computer storage medium for storing a computer program, wherein the computer program comprises instructions executable by at least one processor that, when executed by the at least one processor, perform the method of any one of claims 1 to 23 or the method of any one of claims 24 to 40.

47. A computer program for causing a computer to perform the method of any one of claims 1 to 23 or the method of any one of claims 24 to 40.
